# EUROPEAN PATENT APPLICATION

(11) **EP 4 629 006 A1**
(43) Date of publication of application: **08.10.2025**
(21) Application number: 23897462.0
(22) Date of filing: 13.11.2023
(51) Int. Cl.: G05B 19/418

(54) **WORK MONITORING SUPPORT SYSTEM**

(30) Priority: 02.12.2022 JP 2022193735
(71) Applicant: Hitachi, Ltd., Tokyo 100-8280 (JP)
(72) Inventor: OHNO Chiyo, Tokyo 100-8280 (JP); IKEDA Naohito, Tokyo 100-8280 (JP); OUCHI Satoshi, Tokyo 100-8280 (JP)
(74) Representative: Mewburn Ellis LLP
(86) International application number: PCT/JP2023/040802
(87) International publication number: WO 2024/116810

(57) **Abstract**

In order to efficiently perform field management, a virtual production monitoring model processing unit configured to generate a virtual production monitoring model (M1) which is a virtual three-dimensional image of a configuration of a field, acquire time series information on a state of the field, and reflect the time series information in the virtual production monitoring model (M1), and a display processing unit configured to display, on a VR terminal used by a user, the virtual production monitoring model (M1) in which the time series information is reflected are provided. Further, the virtual production monitoring model processing unit generates diving three-dimensional information, which is a three-dimensional image as if the user is present in the field, for the virtual production monitoring model (M1) in which a state of a current field is reflected, and the display processing unit displays the diving three-dimensional information on the VR terminal used by the user.

## Description

### Technical Field

The present invention relates to a technique for a work monitoring support system.

### Background Art

In industrial production factories, products are produced using production methods such as a line system, a cell system, and a job shop system. One product is produced through a plurality of processes, and one process includes one or more pieces of work. At fields, products are produced based on a production plan that is drawn up in advance, but there is often a discrepancy between the production plan and a work result. In particular, for manual work by field workers, which has a high degree of discrepancy, it is necessary to accurately collect a result time serving as the work result, and take countermeasures such as changing a worker allocation plan according to a progress state of production.

Regarding such a technique, PTL 1 describes "a progress and operation monitoring system for monitoring a progress state and an operation state in a production field including a plurality of work processes, the system including: a production result management unit configured to manage production result data acquired from each of the work processes; a production plan management unit configured to manage a process-specific production plan for each of the work processes; and a production monitoring unit configured to display a problem of work capacity in each of the work processes that is analyzed based on each piece of the production result data managed by the production result management unit and each of the process-specific production plans managed by the production plan management unit, and provide a user with a production monitoring screen for receiving an instruction to change allocation of workers to each of the work processes, in which the production monitoring screen displays the process-specific production plan and the production result data for each of the work processes in comparison, and displays a setting screen for instructing the allocation of workers to each of the work processes according to the instruction from the user, and when an allocation destination process to which a worker is additionally allocated and an allocation source process to provide the worker to the allocation destination process are selected from each of the work processes on the production monitoring screen, the production monitoring unit extracts a worker candidate that can be allocated from the allocation source process to the allocation destination process and displays the worker candidate on the setting screen (see claim 1).

On the other hand, in recent years, a concept called a "metaverse" has emerged, which is a three-dimensional virtual space configured inside a computer where a large number of people can participate in communication or receive various content and services. Due to the influence of COVID-19 in recent years, the "metaverse" is expected to be utilized not only in entertainment of games and the like but also in business fields. (For example, NPL 1)

### Citation List

### Patent Literature

PTL 1: Japanese Patent No. 6945369

### Non Patent Literature

NPL 1: "Metaverse Overview and Trends: Towards Use in Business Scenarios", [online], July 1, 2022, The Japan Research Institute, Limited, Advanced Technology Lab, [Retrieved November 3, 2022], Internet <URL: https://www.jri.co.jp/MediaLibrary/file/column/opinion/pdf /13531.pdf>

### Summary of Invention

### Technical Problem

The technique described in PTL 1 is mainly intended to manage the progress of production. Therefore, for example, when an inspection defect or the like occurs during production, a person concerned needs to use a dedicated application or service to individually check and analyze various pieces of data related to the work process where the inspection defect occurs. Similarly, in the technique described in PTL 1, when a delay occurs in the work progress, it is necessary to perform a simulation for predicting or avoiding a delay that is likely to increase in the future by using another application or service, and therefore improvements are needed in terms of time and effort. To avoid this, it is necessary to improve an environment such that progress management, problem detection, analysis, and resolution can be performed seamlessly.

In the case of the technique described in NPL 1, it is necessary to monitor not only equipment and robots but also workers who perform manual work on the field. One issue that is being cited for a field worker is a heavy mental stress caused by constant or irregular monitoring of a movement thereof by cameras currently installed in many factories. When a production manager monitors a worker in a virtual space, portions that the production manager wishes to check vary depending on a purpose of monitoring (for example, work efficiency, quality, and safety), and thus an appropriate appearance is necessary.

The invention has been made in view of such a background, and an object of the invention is to efficiently perform field management.

### Solution to Problem

In order to solve the above problems, in the invention, a first virtual reality generation unit configured to generate a first virtual reality image which is a virtual three-dimensional image of a configuration of a predetermined field, a reflection unit configured to acquire time series information of a state of the field and reflect the time series information in the first virtual reality image, and a display processing unit configured to display, on a terminal used by a user, the first virtual reality image in which the time series information is reflected are provided.

Other solutions will be described as appropriate in the embodiments.

### Advantageous Effects of Invention

According to the invention, field management can be efficiently performed.

### Brief Description of Drawings

[FIG. 1] FIG. 1 is a schematic configuration diagram of a work monitoring support system according to a first embodiment.
[FIG. 2] FIG. 2 is a diagram illustrating a system configuration of the work monitoring support system.
[FIG. 3A] FIG. 3A is a diagram illustrating a configuration example of factory information.
[FIG. 3B] FIG. 3B is a diagram illustrating a configuration example of line information.
[FIG. 4A] FIG. 4A is a diagram illustrating a configuration example of tool-equipment information.
[FIG. 4B] FIG. 4B is a diagram illustrating a configuration example of robot information.
[FIG. 4C] FIG. 4C is a diagram illustrating a configuration example of worker information.
[FIG. 5A] FIG. 5A is a diagram illustrating a configuration example of product information.
[FIG. 5B] FIG. 5B is a diagram illustrating a configuration example of component information.
[FIG. 5C] FIG. 5C is a diagram illustrating a configuration example of customer information.
[FIG. 6A] FIG. 6A is a diagram illustrating a configuration example of work information.
[FIG. 6B] FIG. 6B is a diagram illustrating a configuration example of work plan information.
[FIG. 7A] FIG. 7A is a diagram illustrating a configuration example of field information.
[FIG. 7B] FIG. 7B is a diagram illustrating a configuration example of position information.
[FIG. 7C] FIG. 7C is a diagram illustrating a configuration example of sensor information.
[FIG. 8] FIG. 8 is a diagram illustrating a configuration example of work result information.
[FIG. 9] FIG. 9 is a diagram illustrating a detailed configuration example of a work plan management unit.
[FIG. 10] FIG. 10 is a flowchart illustrating a processing procedure performed by a work flow generation unit to generate a work flow.
[FIG. 11] FIG. 11 is a diagram illustrating a detailed configuration example of a work monitoring unit.
[FIG. 12] FIG. 12 is a flowchart illustrating a procedure for generating three-dimensional basic information.
[FIG. 13] FIG. 13 is an image diagram illustrating the three-dimensional basic information.
[FIG. 14] FIG. 14 is a flowchart illustrating a processing procedure for generating a virtual production monitoring model.
[FIG. 15] FIG. 15 is an image diagram (part 1) illustrating the virtual production monitoring model.
[FIG. 16] FIG. 16 is a flowchart illustrating a procedure of state information superimposing processing of superimposing state information of work on the virtual production monitoring model.
[FIG. 17] FIG. 17 is an image diagram (part 2) illustrating the virtual production monitoring model.
[FIG. 18] FIG. 18 is a flowchart illustrating a processing procedure for superimposing progress information.
[FIG. 19] FIG. 19 is an image diagram (part 3) illustrating the virtual production monitoring model.
[FIG. 20A] FIG. 20A is a diagram illustrating a data example of plot position management information.
[FIG. 20B] FIG. 20B is a diagram (part 1) illustrating an example of a plot position management setting screen.
[FIG. 20C] FIG. 20C is a diagram (part 2) illustrating an example of the plot position management setting screen.
[FIG. 21] FIG. 21 is an image diagram related to diving into the virtual production monitoring model.
[FIG. 22A] FIG. 22A is a diagram illustrating an example of a diving check screen.
[FIG. 22B] FIG. 22B is a diagram (part 1) illustrating an example of a diving three-dimensional screen.
[FIG. 23] FIG. 23 is a flowchart illustrating a procedure of diving processing.
[FIG. 24] FIG. 24 is a diagram illustrating an example of a virtual production monitoring model when a defect occurs.
[FIG. 25A] FIG. 25A is a diagram illustrating an example of a selection screen displayed on a VR terminal when a two-dimensional barcode is read by the VR terminal.
[FIG. 25B] FIG. 25B is a diagram (part 2) illustrating an example of the diving three-dimensional screen.
[FIG. 26] FIG. 26 is a flowchart illustrating a procedure of progress support countermeasure processing.
[FIG. 27] FIG. 27 is a diagram illustrating an example of the virtual production monitoring model in which countermeasure plan information is displayed.
[FIG. 28] FIG. 28 is a diagram (part 1) illustrating an example of the virtual production monitoring model in which a specific countermeasure plan is displayed.
[FIG. 29] FIG. 29 is a diagram (part 2) illustrating an example of the virtual production monitoring model in which a specific countermeasure plan is displayed.
[FIG. 30] FIG. 30 is a diagram illustrating an example of the virtual production monitoring model during execution of a countermeasure.
[FIG. 31] FIG. 31 is a diagram illustrating an example of an updated virtual production monitoring model after the countermeasure is completed.
[FIG. 32A] FIG. 32A is a diagram illustrating an example of installation of a movable three-dimensional camera.
[FIG. 32B] FIG. 32B is a diagram illustrating an example in which the three-dimensional camera is mounted on an AGV or a robot.
[FIG. 32C] FIG. 32C is a diagram illustrating an example in which the three-dimensional camera is mounted on a bottom of a drone.
[FIG. 33] FIG. 33 is a diagram illustrating an example of display level setting information.
[FIG. 34A] FIG. 34A is a diagram (part 1) illustrating an actual video.
[FIG. 34B] FIG. 34B is a diagram (part 3) illustrating an example of the diving three-dimensional screen.
[FIG. 35A] FIG. 35A is a diagram (part 2) illustrating the actual video.
[FIG. 35B] FIG. 35B is a diagram (part 4) illustrating an example of the diving three-dimensional screen.
[FIG. 36] FIG. 36 is a diagram illustrating a hardware structure of a computer used in the present embodiment.

### Description of Embodiments

Next, modes for implementing the invention (referred to as "embodiments") will be described in detail with reference to the drawings as appropriate.

### <First Embodiment>

### [Schematic Configuration Diagram]

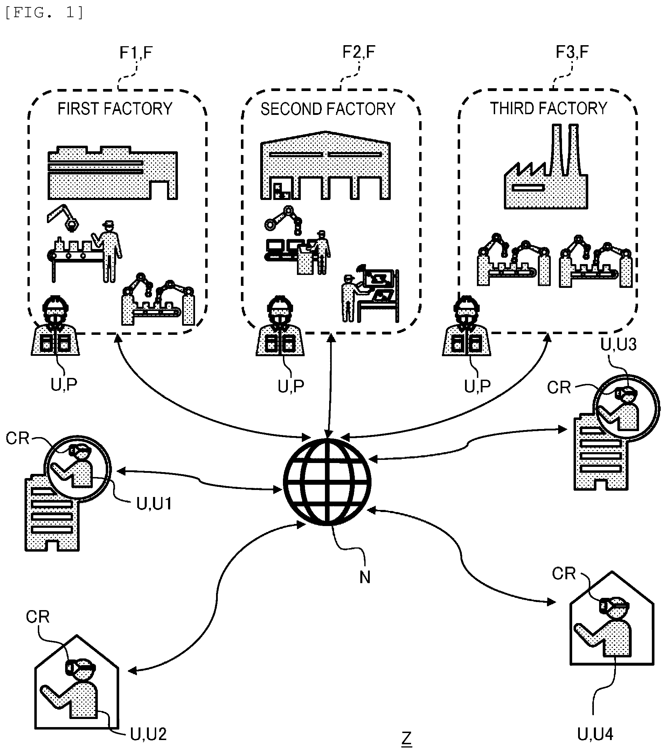

FIG. 1 is a schematic configuration diagram of a work monitoring support system Z according to a first embodiment.

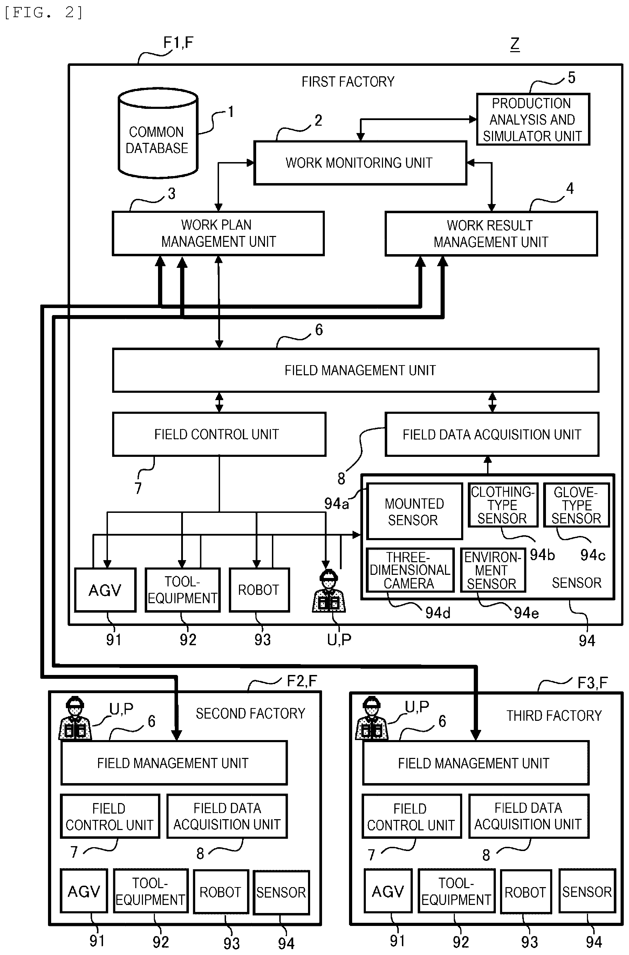

A first factory F1, a second factory F2, and a third factory F3 are fields (production fields; predetermined fields) where products are produced through stages, and are objects to be managed by the work monitoring support system Z illustrated in FIG. 2. The first factory F1, the second factory F2, and the third factory F3 are, for example, an assembly factory, an inspection factory where an inspection process is performed, and a component factory where work such as production, preparation, and inspection is performed, respectively. Hereinafter, the first factory F1, the second factory F2, and the third factory F3 are collectively referred to as a factory F as appropriate. A field worker P working in these factories F as a user U can access the work monitoring support system Z via the Internet N. The respective factories F are not limited to an assembly factory, an inspection factory, and a component factory. Further, the respective factories F may be located in a different building at the same site or premises, or may be located at a different site in Japan or overseas. In the example illustrated in the present embodiment, three factories F are targeted, but the number of factories F is not limited to three.

The user U at another base other than the factory F can also access the work monitoring support system Z via the Internet N. As the user U at another base other than the factory F, a user U1 in the business management department who is in an office, a user U2 in the design department who is working from home, and the like are conceivable. Further, the user U related to product production can also access the work monitoring support system Z via the Internet N. As the user U related to product production, for example, a user U3 as a customer who purchases a product and a user U4 as a supplier who provides a tool, equipment, or a component are conceivable.

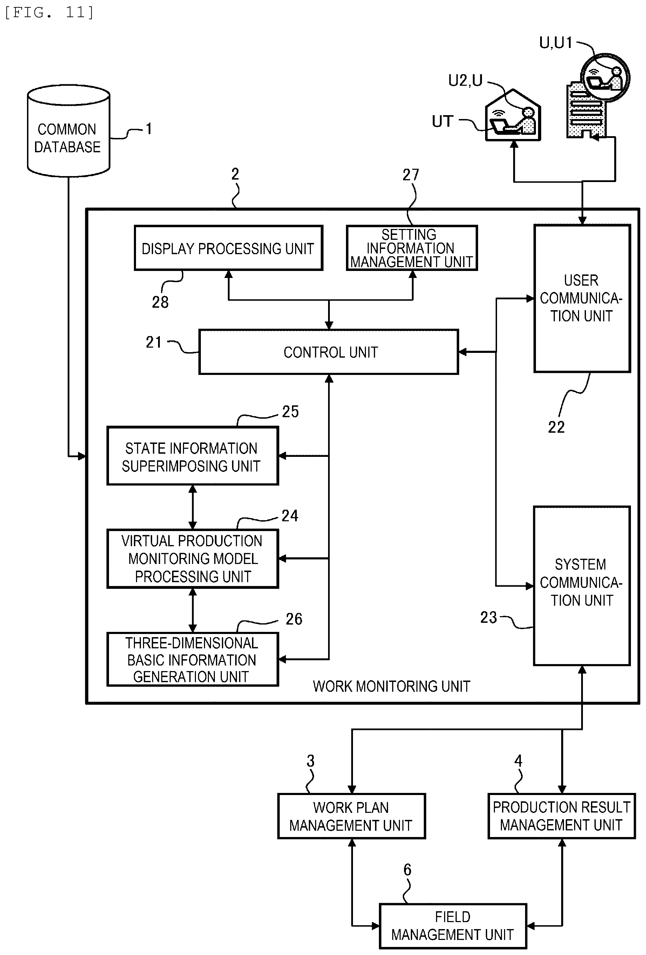

The users U1 to U4 who are remote from the factory F can view a work progress state of the work monitoring support system Z via a personal computer (PC) or a tablet terminal (for example, a user terminal UT illustrated in FIG. 11), and can also view virtual reality related to an inside of the factory F via a VR terminal CR and the Internet N. The VR terminal CR is a terminal worn (used) by the user U, such as a head-mounted display or a smartphone attached to VR goggles.

### [System Configuration Diagram]

FIG. 2 is a diagram illustrating a system configuration of the work monitoring support system Z. Reference is made to FIG. 1 as appropriate.

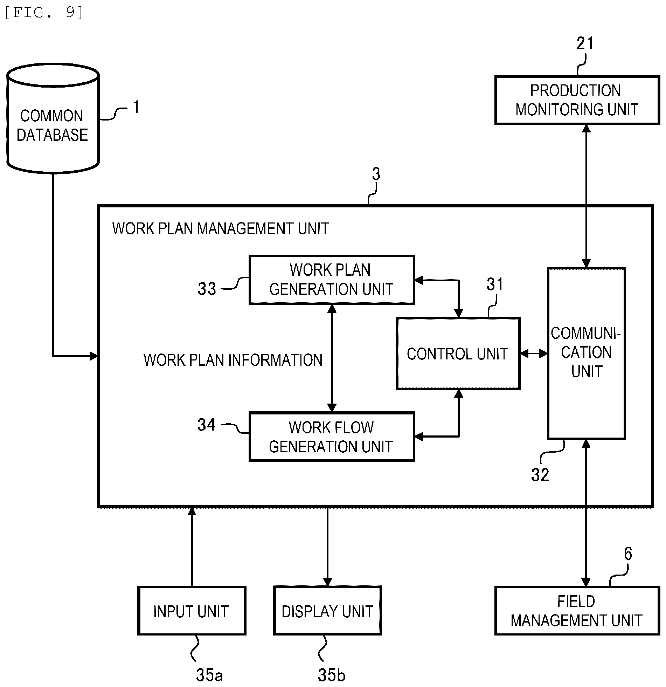

The work monitoring support system Z configured in the first factory F1 (the factory F where an assembly process is performed in the example illustrated in FIG. 2) includes a common database 1, a work monitoring unit 2, a work plan management unit 3, a work result management unit 4, and a production analysis and simulator unit 5. The work monitoring support system Z includes a field management unit 6, a field control unit 7, and a field data acquisition unit 8. The work monitoring support system Z further includes an automatic guided vehicle (AGV) 91, tool-equipment 92, a robot 93, and a sensor 94. The common database 1 is connected to the work plan management unit 3, the work monitoring unit 2, and the like as illustrated in FIGS. 9 and 11 to be described later.

The work monitoring unit 2 has a feature of the present embodiment, and collectively manages a progress state and operation state for a field present in each of one or more factories F. The work monitoring unit 2 provides an environment in which the user U can check these states in a virtual space. The work monitoring unit 2 includes a first virtual reality generation unit, a reflection unit, a display processing unit, and a second virtual reality generation unit.

The work plan management unit 3 manages a production plan for a field. That is, a production plan for an entire field, a production plan for each piece of work, and a production plan for each product are managed.

The work result management unit 4 manages a production result for the production plan for the field. That is, a production result for each piece of work and a production result for each product are managed based on information acquired from the field management unit 6.

The production analysis and simulator unit 5, which is a countermeasure plan generation unit, analyzes a progress state or an operation state using the production plan for the field and the production result, and analyzes whether a problem such as a delay or a quality defect occurs. The production analysis and simulator unit 5 has a function to generate a countermeasure plan for the problem and to simulate how much the efficiency changes depending on the countermeasure plan.

The field management unit 6, which also serves as a storage unit, manages a field.

The field control unit 7 displays and instructs details of work to be performed according to the production plan to the AGV 91, the tool-equipment 92, the robot 93, and the field worker P at the field. When a procedure omission or an error occurs during execution, the field control unit 7 notifies the fact and performs control such as operation stop → procedure recheck → procedure reperforming.

The field data acquisition unit 8 individually acquires field data (not illustrated) related to work performed by the AGV 91, the tool-equipment 92, the robot 93, and the field worker P at the field, and organizes and stores the field data as time series data. The field data includes device data and sensor data. The device data is data acquired by the field data acquisition unit 8 through direct communication with the AGV 91, the tool-equipment 92, and the robot 93. The sensor data is data acquired by the field data acquisition unit 8 from the AGV 91, the tool-equipment 92, the sensor 94 mounted on the robot 93, the sensor 94 worn by the field worker P, an environment sensor 94e installed at the field, and the like.

The AGV 91 is a mobile robot that loads a material, a workpiece, a component, a tool, and the like required at the field and carries them to a predetermined place. The AGV 91 includes an automated guided forklift (AGF), and an artificial intelligence (AI) transport robot.

The tool-equipment 92 is a tool or equipment required on a field. The tool includes a digital tool capable of digitally setting and acquiring a measurement value and a setting. An installation place of the tool-equipment 92 can be managed using radio frequency identification (RFID), a barcode, a beacon, or the like.

The robot 93 is an industrial robot or a human-collaboration robot used on a field, and is the robot 93 not including the AGV 91 described above.

The field worker P is a worker who performs manual work such as assembly work and inspection work at a field.

The sensor 94 is installed at a field and serves to sense a state of the field. The sensor 94 includes a mounted sensor 94a that is built into or externally mounted on the AGV 91, the tool-equipment 92, and the robot 93. The mounted sensor 94a includes a pressure sensor, a vibration sensor, a current-voltage sensor, an illuminance sensor, a global positioning system (GPS), a fingerprint sensor, and the like.

The sensor 94 may include a clothing-type sensor 94b or a glove-type sensor 94c worn by the field worker P. The sensor 94 includes a three-dimensional camera 94d and the environment sensor 94e installed at the field in the factory F. The three-dimensional camera 94d is a three-dimensional information acquisition unit. In addition, the sensor 94 may include a 2D camera, an infrared camera, an inertial measurement unit (IMU), a laser distance measuring device, and the like, which are not illustrated in FIG. 2. The sensors 94 may include a wearable camera worn by the field worker P (not illustrated in FIG. 2), a blood pressure sensor, and the like. Further, although not illustrated in FIG. 2, the sensor 94 may include a temperature and humidity sensor, an illuminance sensor, and the like that are installed at the field and mainly used for measuring a field environment. The sensor 94 is intended to detect a change in field environment and content of work being performed by the tool-equipment 92, the robot 93, or the field worker P.

The respective sensors 94 include the sensor 94 that is already installed and the sensor 94 that is newly installed for the work monitoring support system Z.

The common database 1 stores data used in common in each configuration of the work monitoring support system Z.

The work monitoring support system Z configured in the second factory F2 (an inspection factory where an inspection process is performed in the example in FIG. 2) and the third factory F3 (a component publication where a component is produced, prepared, and inspected in the example in FIG. 2) includes the field management unit 6, the field control unit 7, the field data acquisition unit 8, the AGV 91, the tool-equipment 92, the robot 93, and the sensor 94. The field workers P are also stationed at the second factory F2 and the third factory F3. The field management unit 6, the field control unit 7, the field data acquisition unit 8, the AGV 91, the tool-equipment 92, the robot 93, the field worker P, and the sensor 94 are also installed in the second factory F2 and the third factory F3, respectively. Since these components have the same functions as those installed in the first factory F1, the description thereof will be omitted.

The field management units 6 in the second factory F2 and the third factory F3 can communicate with the work plan management unit 3 and the work result management unit 4 installed in the first factory F1 using the Internet N illustrated in FIG. 1, a dedicated network (not illustrated), or the like.

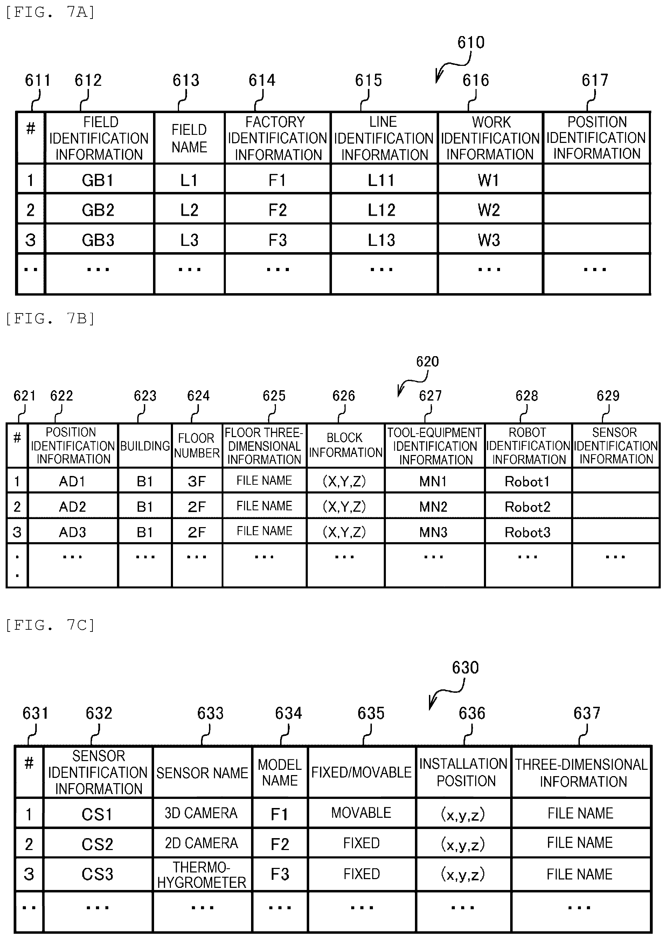

In FIG. 2, the common database 1, the work monitoring unit 2, the work plan management unit 3, the work result management unit 4, and the like installed in the first factory F1 may be configured in a cloud on the Internet N (see FIG. 1). The common database 1, the work monitoring unit 2, the work plan management unit 3, and the work result management unit 4 installed in the first factory F1 may not be collectively installed at one location. Further, the field management unit 6 installed in any one of the first factory F1, the second factory F2, and the third factory F3 may serve as a master to manage all field information 610 (see FIG. 7A). The field information 610, which will be described later, stores information on a field such as the factory F and a line.

In the example illustrated in FIG. 2, the work monitoring unit 2, the work plan management unit 3, the work result management unit 4, the production analysis and simulator unit 5, and the common database 1 are each installed in an assembly factory, but the invention is not limited thereto. For example, the work monitoring unit 2, the work plan management unit 3, the work result management unit 4, the production analysis and simulator unit 5, and the common database 1 may be installed in a factory other than the assembly factory, or may be installed in a head office (not illustrated) or the like.

In the example illustrated in FIG. 2, it is assumed that the work monitoring unit 2, the work plan management unit 3, the work result management unit 4, the production analysis and simulator unit 5, and the common database 1 are each an independent computer. However, the invention is not limited thereto, and any plurality of units (the common database 1 to the production analysis and simulator unit 5) may be collectively installed as one server.

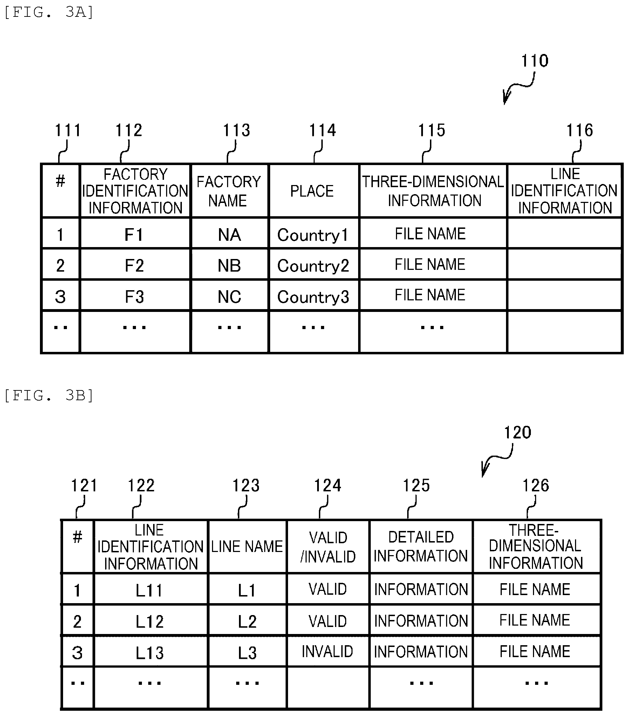

Next, information used in the present embodiment will be described with reference to FIGS. 3A to 8. In FIGS. 3A to 8, reference is made to FIG. 2 as appropriate. A user can refer to and edit the information illustrated in FIGS. 3A to 8 as necessary.

### [Information Managed in Common Database 1]

Factory information 110, line information 120, tool-equipment information 130, robot information 140, worker information 150, product information 160, component information 170, and customer information 180 that are managed in the common database 1 will be described with reference to FIGS. 3A to 5C. Reference is made to FIG. 2 as appropriate.

### (Factory Information 110)

FIG. 3A is a diagram illustrating a configuration example of the factory information 110.

The factory information 110 includes a factory registration number 111, factory identification information 112, a factory name 113, a place 114, three-dimensional information 115, and line identification information 116.

The factory registration number 111 is a number uniquely assigned to information (a record) registered in the factory information 110.

The factory identification information 112 is identification information for uniquely identifying the factory F (that is, the first factory F1, the second factory F2, and the third factory F3) including a field to be managed by the work monitoring support system Z. In the example illustrated in FIG. 3A, "F1" indicates the first factory F1, "F2" indicates the second factory F2, and "F3" indicates the third factory F3.

The factory name 113 is a name of the factory F indicated by the factory identification information 112.

The place 114 is a location of the factory F indicated by the factory identification information 112.

The three-dimensional information 115 indicates a data file related to three-dimensional information of the factory F indicated by the factory identification information 302. The information stored in the three-dimensional information 115 is information created by 3D-CAD (for example, information on building information modeling (BIM)), but may be information generated based on an image of the inside of the factory F that is actually captured by the three-dimensional camera 94d, or the like.

The line identification information 116 is information indicating a line associated with the factory F indicated by the factory identification information 112. The identification information stored in the line identification information 116 is information linked to line identification information 122 stored in the line information 120 illustrated in FIG. 3B. A plurality of pieces of identification information may be stored in a field of the line identification information 116. Note that pointer information for linking to the line information 120 may be stored instead of the line identification information 116.

### (Line Information 120)

FIG. 3B is a diagram illustrating a configuration example of the line information 120.

The line information 120 includes a line registration number 121, the line identification information 122, a line name 123, a valid/invalid flag 124, detailed information 125, and three-dimensional information 126.

The line registration number 121 is a number uniquely assigned to information (a record) registered in the line information 120.

The line identification information 122 is identification information for uniquely identifying a line at a field.

The line name 123 is a name of a line indicated by the line identification information 122.

The valid/invalid flag 124 is information indicating whether the line indicated by the line identification information 122 is currently valid or invalid. The expression "the line is valid" means that the corresponding line is operating, and the expression "the line is invalid" means that the corresponding line is not operating.

The detailed information 125 is a description of the line indicated by the line identification information 122 (for example, a work name, and a name of a product to be produced), or information related to an update history of a line.

The three-dimensional information 126 indicates a data file related to the three-dimensional information of the line indicated by the line identification information 122. The information stored in the three-dimensional information 126 is information created by the 3D-CAD, and may also be information generated based on an image captured by the three-dimensional camera 94d, or the like.

As described above, the line information 120 is associated (linked) with the factory information 110 by the line identification information 122 via a field of the line identification information 116 in the factory information 110 illustrated in FIG. 3A.

### (Tool-equipment Information 130)

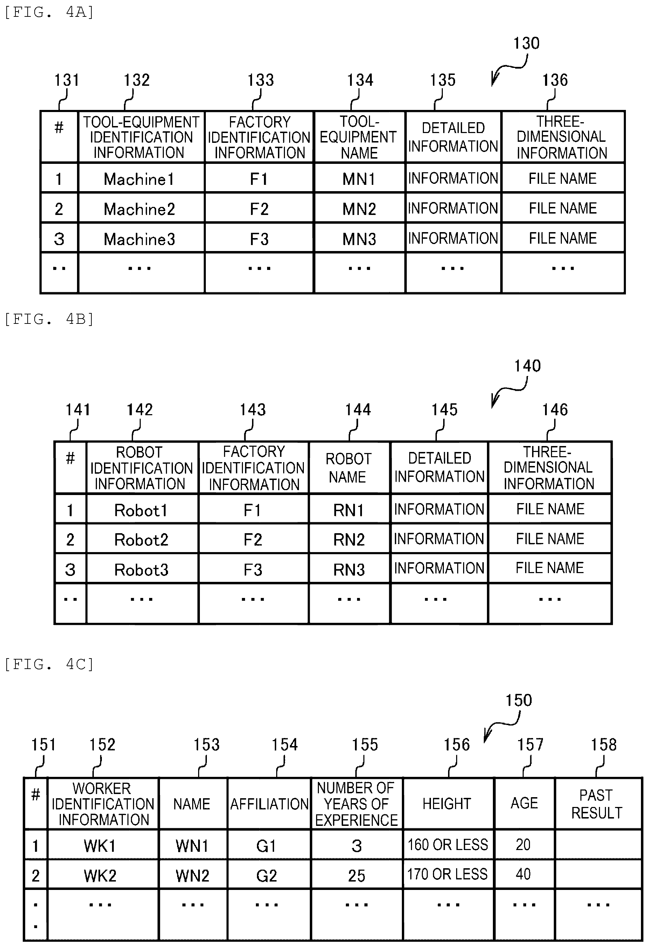

FIG. 4A is a diagram illustrating a configuration example of the tool-equipment information 130.

The tool-equipment information 130 includes a tool-equipment registration number 131, tool-equipment identification information 132, factory identification information 133, a tool-equipment name 134, detailed information 135, and three-dimensional information 136.

The tool-equipment registration number 131 is a number uniquely assigned to information (a record) registered in the tool-equipment information 130.

The tool-equipment identification information 132 is identification information for uniquely identifying the tool-equipment 92 used at a field.

The factory identification information 133 is factory identification information of the factory F including the tool-equipment 92 indicated by the tool-equipment identification information 132. The identification information stored in the factory identification information 133 is linked to the factory identification information 112 in the factory information 110 illustrated in FIG. 3A. A plurality of pieces of identification information may be stored in a field of the factory identification information 133.

The tool-equipment name 134 is a model name or a name of the tool-equipment 92.

The detailed information 135 includes a description of the tool-equipment 92 indicated by the tool-equipment identification information 132. The description of the tool-equipment 92 includes, for example, a work name to be used, a specification, maintenance information, and manual information.

The three-dimensional information 136 is a data file related to the three-dimensional information of the tool-equipment 92 indicated by the tool-equipment identification information 132. Information stored in the three-dimensional information 136 is as follows. Information created by the 3D-CAD may be information generated based on the image captured by the three-dimensional camera 94d or the like.

### (Robot Information 140)

FIG. 4B is a diagram illustrating a configuration example of the robot information 140.

The robot information 140 includes a robot registration number 141, robot identification information 142, factory identification information 143, a robot name 144, detailed information 145, and three-dimensional information 146.

The robot registration number 141 is a number uniquely assigned to information (a record) registered in the robot information 140.

The robot identification information 142 is identification information for uniquely identifying the robot 93 used at the field.

The factory identification information 143 is identification information of the factory F in which the robot 93 indicated by the robot identification information 142 is located. The factory identification information 143 is linked to the factory identification information 112 of the factory information 110 illustrated in FIG. 3A. A plurality of pieces of identification information may be stored in the factory identification information 143.

The robot name 144 is a model name or a name of the robot 93 indicated by the robot identification information 142.

The detailed information 145 is information including a description of the robot 93 indicated by the robot identification information 142. The description of the robot 93 includes, for example, a name of work for which the robot 93 is used, a specification, maintenance information, and manual information.

The three-dimensional information 146 is a data file related to three-dimensional information of the robot 93 indicated by the robot identification information 142. The information stored in the three-dimensional information 146 is information created by the 3D-CAD, and may also be information generated based on the image captured by the three-dimensional camera 94d, or the like.

### (Worker Information 150)

FIG. 4C is a diagram illustrating a configuration example of the worker information 150.

The worker information 150 includes a worker registration number 151, worker identification information 152, a name 153, an affiliation 154, a number of years of experience 155, a height 156, an age 157, and a past result 158.

The worker registration number 151 is a number uniquely assigned to information (a record) registered in the worker information 150.

The worker identification information 152 is identification information for uniquely identifying the field worker P who is engaged in work at a field.

The name 153, the affiliation 154, the number of years of experience 155, the height 156, and the age 157 store a name, an affiliation, a number of years of experience of working, a height, and an age of the field worker P indicated by the worker identification information 152. The past result 158 stores information on products, work, skills, and the like assigned in the past. The number of times of experience of each piece of work may be stored in the worker information 150.

### (Product Information 160)

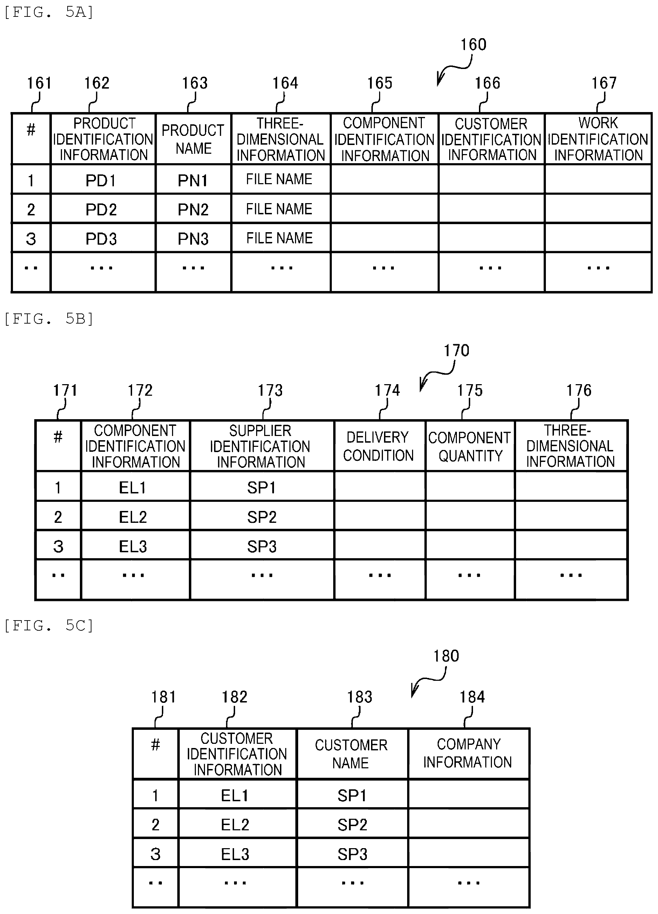

FIG. 5A is a diagram illustrating a configuration example of the product information 160.

The product information 160 stores information on a product produced in the factory F.

The product information 160 includes a product registration number 161, product identification information 162, a product name 163, three-dimensional information 164, component identification information 165, customer identification information 166, and work identification information 167.

The product registration number 161 is a number uniquely assigned to information (a record) registered in the product information 160.

The product identification information 162 is identification information for uniquely identifying a product to be produced at a field.

The product name 163 is a name of a product indicated by the product identification information 162.

The three-dimensional information 164 indicates a data file related to three-dimensional information of the product indicated by the product identification information 162. The information stored in the three-dimensional information 164 is information created by the 3D-CAD, and may also be information generated based on the image captured by the three-dimensional camera 94d, or the like.

The component identification information 165 indicates information on a component necessary for producing the product indicated by the product identification information 162. The identification information stored in the component identification information 165 is information linked to identification information stored in component identification information 172 in the component information 170 to be described later in FIG. 5B. A plurality of pieces of identification information may be stored in a field of the component identification information 165. Instead of the component identification information 165, a pointer for linking to the component information 170 may be stored.

The customer identification information 166 indicates information on a customer to whom the product indicated by the product identification information 162 is provided. The identification information stored in the customer identification information 166 is linked to identification information stored in customer identification information 182 in the customer information 180 to be described later in FIG. 5C. Instead of the customer identification information 166, a pointer for linking to the customer information 180 may be set.

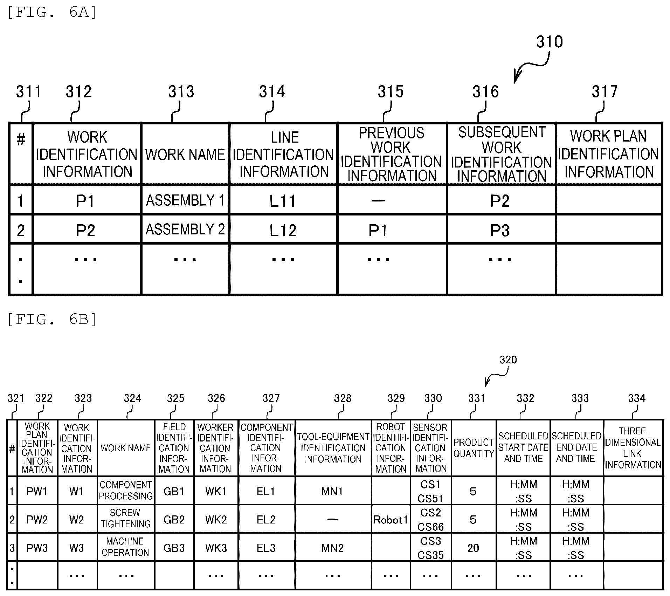

The work identification information 167 indicates information on work necessary for producing the product indicated by the product identification information 162. The identification information stored in the work identification information 167 is information linked to work identification information 312 in work information 310 to be described later in FIG. 6A. Instead of the work identification information 167, a pointer for linking to the work information 310 may be set.

### (Component Information 170)

FIG. 5B is a diagram illustrating a configuration example of the component information 170.

The component information 170 includes a component registration number 171, component identification information 172, supplier identification information 173, a delivery condition 174, a component quantity 175, and three-dimensional information 176.

The component registration number 171 is a number uniquely assigned to information (a record) registered in the component information 170.

The component identification information 172 is identification information for uniquely identifying a component necessary for producing a product.

The supplier identification information 173 stores identification information on a manufacturer (a supplier) that supplies a component indicated by the component identification information 172. The identification information stored in the supplier identification information 173 is linked to supplier information (not illustrated). The supplier information stores, for example, a manufacturer name, a manufacturer location, contact information, and contract information.

The delivery condition 174 stores a condition required when a component is provided from the supplier indicated by the supplier identification information 173. The condition stored in the delivery condition 174 includes, for example, information such as accuracy and a delivery deadline of a component, a packaging-transportation method, and legal regulations.

The component quantity 175 stores the number of components necessary for producing a product. The quantity stored in the component quantity 175 may be a quantity per product or a quantity in a specific unit.

The three-dimensional information 176 is a data file related to three-dimensional information of a component. The information stored in the three-dimensional information 176 is information created by the 3D-CAD, but is not limited to the information created by the CAD, and may be information generated based on the image captured by the three-dimensional camera 94d, or the like.

### (Customer Information 180)

FIG. 5C is a diagram illustrating a configuration example of the customer information 180.

The customer information 180 includes a customer registration number 181, customer identification information 182, a customer name 183, and company information 184.

The customer registration number 181 is a number uniquely assigned to information (a record) registered in the customer information 180.

The customer identification information 182 is identification information for uniquely identifying a customer to whom a produced product is provided.

The customer name 183 is a personal name or a company name of a customer indicated by the customer identification information 182.

When the customer is a company, information on the company is stored in the company information 184. The information stored in the company information 184 is, for example, information such as a company scale, contract information, and a location.

Next, data examples of the work information 310 and the work plan information 320 that store information on a production plan managed by the work plan management unit 3 will be described with reference to FIGS. 6A and 6B.

### (Work Information 310)

FIG. 6A is a diagram illustrating a configuration example of the work information 310.

The work information 310 includes a work registration number 311, work identification information 312, a work name 313, line identification information 314, previous work identification information 315, subsequent work identification information 316, and work plan identification information 317.

The work registration number 311 is a number uniquely assigned to information (a record) registered in the work information 310.

The work identification information 312 is identification information for uniquely identifying work in product production.

The work name 313 is a name of work indicated by the work identification information 312.

The line identification information 314 is identification information of a line on which production work indicated by the work identification information 312 is performed, and is information linked to the line identification information 122 in the line information 120 illustrated in FIG. 3B.

The previous work identification information 315 stores identification information of work to be performed immediately before the work indicated by the work identification information 312. When there is no work to be performed immediately before the work indicated by the work identification information 312, for example, "-" is set in a field of the previous work identification information 315.

The subsequent work identification information 316 stores identification information of work to be performed after the work indicated by the work identification information 312. When there is no work to be performed immediately after the work indicated by the work identification information 312, for example, "-" is set in a field of the subsequent work identification information 316.

The work plan identification information 317 indicates production plan information on the work indicated by the work identification information 312. The identification information stored in the work plan identification information 317 is information linked to identification information stored in work plan identification information 322 in the work plan information 320 to be described later in FIG. 6B. A plurality of pieces of identification information may be stored in a field of the work plan identification information 317. Instead of the work plan identification information 317, a pointer for linking to the work plan information 320 to be described later in FIG. 6B may be set.

### (Work Plan Information 320)

FIG. 6B is a diagram illustrating a configuration example of the work plan information 320.

The work plan information 320 includes a work plan registration number 321, work plan identification information 322, work identification information 323, a work name 324, field identification information 325, and worker identification information 326. Further, the work plan information 320 includes component identification information 327, tool-equipment identification information 328, robot identification information 329, sensor identification information 330, product quantity 331, scheduled start date and time 332, scheduled end date and time 333, and three-dimensional link information 334.

The work plan registration number 321 is a number uniquely assigned to information (a record) registered in the work plan information 320.

The work plan identification information 322 is identification information for uniquely identifying work scheduled to be performed.

The work identification information 323 is identification information for uniquely identifying a type and procedure of work, and is information linked to the work identification information 312 in the work information 310 illustrated in FIG. 6A. For example, information such as "tighten a screw on a component A with serial No. XXX" may be linked to the work identification information 323. Note that the identification information may not be stored in a field of the work identification information 323, and "tighten a screw on a component A" obtained by simplifying "tighten a screw on a component A with serial No. XXX" or the like may be stored. A plurality of pieces of identification information may be stored in the field of the work identification information 323.

The work name 324 stores a name of work.

The field identification information 325 is identification information of a field where work indicated by the work plan identification information 322 is performed. The identification information stored in the field identification information 325 is linked to identification information stored in field identification information 612 included in the field information 610 to be described later in FIG. 7A.

The worker identification information 326 stores information on the field worker P who performs the work indicated by the work plan identification information 322. The worker identification information 326 is information linked to the identification information stored in the worker identification information 152 in the worker information 150 illustrated in FIG. 4C.

The component identification information 327 stores information on a component to be used in the work indicated by the work plan identification information 322. The identification information stored in the component identification information 327 is information linked to the identification information stored in the component identification information 172 in the component information 170 illustrated in FIG. 5B.

The tool-equipment identification information 328 stores information on the tool-equipment 92 to be used in the work indicated by the work plan identification information 322. The identification information stored in the tool-equipment identification information 328 is information linked to the identification information stored in the tool-equipment identification information 132 in the tool-equipment information 130 illustrated in FIG. 4A.

The robot identification information 329 stores information on the robot 93 to be used in the work indicated by the work plan identification information 322. The identification information stored in the robot identification information 329 is information linked to the identification information stored in the robot identification information 142 in the robot information 140 illustrated in FIG. 4B.

The sensor identification information 330 stores information on the sensor 94 to be used in the work indicated by the work plan identification information 322. The identification information stored in the sensor identification information 330 is information linked to identification information stored in sensor identification information 632 in sensor information 630 to be described later in FIG. 7C.

A plurality of pieces of identification information may be stored in each field of the worker identification information 326, the component identification information 327, the tool-equipment identification information 328, the robot identification information 329, and the sensor identification information 330.

The product quantity 331 is a quantity of products (or intermediate products) to be produced in the work indicated by the work plan identification information 322.

The scheduled start date and time 332 and the scheduled end date and time 333 indicate a scheduled start date and time and a scheduled end date and time of the work indicated by the work plan identification information 322. Alternatively, in the scheduled start date and time 332 and the scheduled end date and time 333, an assumed time calculated using the number of years of experience or the past result of the field worker P who performs main work is set. The number of years of experience and the past result of the field worker P are acquired from fields of the number of years of experience 155 and the past result 158 in the worker information 150 illustrated in FIG. 4C using, as a key, the identification information stored in a field of the worker identification information 326.

Work flow information is stored in the three-dimensional link information 334. The work flow information is information obtained by linking the pieces of three-dimensional information 136, 146, and 637 (see FIGS. 4A, 4B, and 7C) of the tool-equipment 92, the robot 93, and the sensor 94 that are scheduled to be used in the work indicated by the work plan identification information 322 to three-dimensional information of a field to be described later, or information obtained by synthesizing these pieces of three-dimensional information. The work flow information will be described later.

Next, data examples of the field information 610, position information 620, and the sensor information 630 that store information on a field managed by the field management unit 6 will be described with reference to FIGS. 7A to 7C.

### (Field Information 610)

FIG. 7A is a diagram illustrating a configuration example of the field information 610.

The field information 610 includes a field registration number 611, field identification information 612, a field name 613, factory identification information 614, line identification information 615, work identification information 616, and position identification information 617.

The field registration number 611 is a number uniquely assigned to information (a record) registered in the field information 610.

The field identification information 612 is identification information for uniquely identifying a field (a block or an area) where work indicated by the work identification information 616 is performed. For example, identification information for identifying a predetermined line (or a plurality of lines) in a case of a line system, a predetermined cell (or a plurality of cells) in a case of a cell system, and a predetermined job shop unit in a case of a job shop system is stored in a field of the field identification information 612.

The field name 613 is a name of a field indicated by the field identification information 612.

The factory identification information 614 is identification information of the factory F where the field indicated by the field identification information 612 is present. The identification information stored in the factory identification information 614 is information linked to identification information stored in a field of the factory identification information 112 in the factory information 110 illustrated in FIG. 3A.

The line identification information 615 is identification information of a line on which the field indicated by the field identification information 612 is present. The identification information stored in the line identification information 615 is information linked to the identification information stored in the line identification information 122 in the line information 120 illustrated in FIG. 3B.

The work identification information 616 indicates a type of work to be performed at the field indicated by the field identification information 612. The identification information stored in the work identification information 616 is information linked to the identification information stored in the work identification information 323 in the work plan information 320 illustrated in FIG. 6B.

The position identification information 617 is information indicating where within the factory F the field indicated by the field identification information 612 is positioned. The identification information stored in the position identification information 617 is information linked to position identification information 622 in the position information 620 to be described later in FIG. 7B. Instead of the position identification information 617, a pointer for linking to the position information 620 may be set.

### (Position Information 620)

FIG. 7B is a diagram illustrating a configuration example of the position information 620.

The position information 620 stores information on a position at a field. The position information 620 includes a position registration number 621, position identification information 622, a building 623, a floor number 624, floor three-dimensional information 625, block information 626, tool-equipment identification information 627, robot identification information 628, and sensor identification information 629.

The position registration number 621 is a number uniquely assigned to information (a record) registered in the position information 620.

The position identification information 622 is identification information for uniquely identifying information on a position indicated by the position identification information.

The building 623 is information for specifying a building when the factory F having a position corresponding to the position identification information 622 has a plurality of buildings.

The floor number 624 is information for specifying a floor when a building 713 in the factory F having the position corresponding to the position identification information 622 has a plurality of floors (floor numbers).

The floor three-dimensional information 625 indicates a data file related to three-dimensional information of the position indicated by the position identification information 622. The floor three-dimensional information 625 is information created by the 3D-CAD, and may also be information created based on an image of the floor that is actually captured by the three-dimensional camera 94d, or the like.

The block information 626 stores information on a block in which a field is present. The block is a division of a space of the field corresponding to the position identification information 622 into a plurality of blocks. For example, when a space of the floor including the position corresponding to the position identification information 622 is divided into a width "10", a depth "6", and a height "5", the position corresponding to the position identification information 622 is stored in a form of being present in a block (2, 3, 1) (described as (X, Y, Z) in FIG. 7B). Instead of the unit of the block, information on a position in an actual field space may be used.

The tool-equipment identification information 627 is identification information of the tool-equipment 92 installed at the position indicated by the position identification information 622. The identification information stored in the tool-equipment identification information 627 is information linked to the identification information stored in the tool-equipment identification information 132 in the tool-equipment information 130 described above in FIG. 4A. A plurality of pieces of identification information may be stored in a field of the tool-equipment identification information 627.

The robot identification information 628 is identification information of the robot 93 installed at the position indicated by the position identification information 622. The identification information stored in the robot identification information 628 is information linked to the identification information stored in the robot identification information 142 in the robot information 140 described above in FIG. 4B. A plurality of pieces of identification information may be stored in a field of the robot identification information 628.

The sensor identification information 629 is identification information of the sensor 94 installed at the position indicated by the position identification information 622. The identification information stored in the sensor identification information 629 is information linked to the identification information stored in the sensor identification information 632 in the sensor information 630 illustrated in FIG. 7C. Instead of the sensor identification information 629, a pointer for linking to the sensor information 630 may be set. A plurality of pieces of identification information may be stored in a field of the sensor identification information 629.

### (Sensor Information 630)

FIG. 7C is a diagram illustrating a configuration example of the sensor information 630.

The sensor information 630 includes a sensor registration number 631, sensor identification information 632, a sensor name 633, a model name 634, a fixed/movable flag 635, an installation position 636, and three-dimensional information 637.

The sensor registration number 631 is a number uniquely assigned to information (a record) registered in the sensor information 630.

The sensor identification information 632 is identification information whose record uniquely identifies the sensor 94.

The sensor name 633 and the model name 634 are a name, a model name, or the like of the sensor 94 indicated by the sensor identification information 632.

The fixed/movable flag 635 is information indicating whether the sensor 94 indicated by the sensor identification information 732 is fixedly installed or is in a movable state. The movable sensor 94 is the robot 93 by which the sensor 94 is movable or the movable three-dimensional camera 94d mounted on the AGV 91.

Information on an installation position of the sensor 94 indicated by the sensor identification information 632 is stored in the installation position 636 (described as (x, y, z) in FIG. 7C). As the information stored in the installation position 636, for example, a position in a block indicated by the block information 626 illustrated in FIG. 7B, information on a position in an actual field space, and the like are stored in a field of the installation position 636. For the above-described sensors 94 that are built into or externally mounted on the AGV 91, the tool-equipment 92, and the robot 93, positions where they are currently present are stored in a field of the installation position 636. For the sensor 94 set to "movable" in the fixed/movable flag 635, a position where the sensor 94 is currently present is also stored in a field of a sensor position.

The three-dimensional information 637 stores a data file related to three-dimensional information of the sensor 94 indicated by the sensor identification information 632. The information stored in the three-dimensional information 637 is information created by the 3D-CAD, and may also be information generated based on an image obtained by actually capturing the sensor 94 by the three-dimensional camera 94d, or the like.

### (Work Result Information 410)

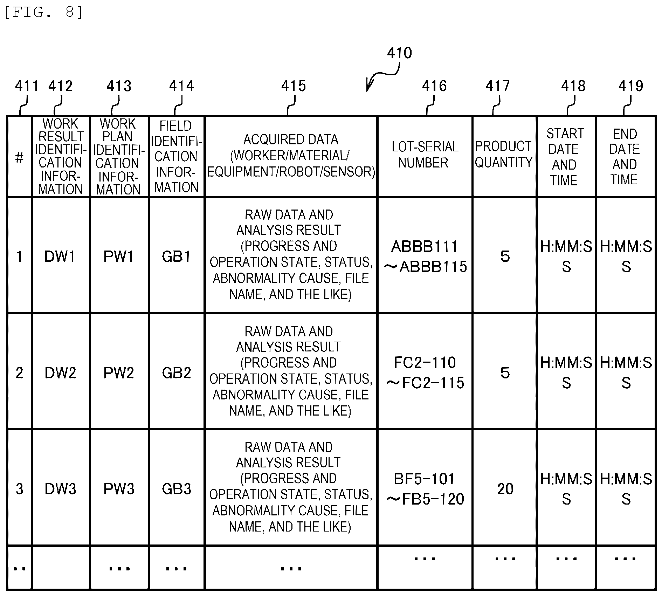

FIG. 8 is a diagram illustrating a configuration example of the work result information 410.

The work result information 410 includes a work result registration number 411, work result identification information 412, work plan identification information 413, field identification information 414, acquired data 415, a lot-serial number 416, a product quantity 417, a start date and time 418, and an end date and time 419.

The work result registration number 411 is a number uniquely assigned to information (a record) registered in the work result information 410.

The work result identification information 412 is identification information for uniquely identifying work that is already performed.

The work plan identification information 413 is identification information for identifying a work plan corresponding to the work result identification information 412, and is information linked to the identification information stored in the work plan identification information 322 in the work plan information 320 described above in FIG. 6B.

The field identification information 414 is identification information of a field where work indicated by the work result identification information 412 is performed. The identification information stored in the field identification information 414 is information linked to the field identification information 612 in the field information 610 described above in FIG. 7A.

The acquired data 415 stores information acquired when the work indicated by the work result identification information 412 is performed. Specifically, information specifying the field worker P who performs the work, a used material, the tool-equipment 92, the robot 93, and the sensor 94, and the like is stored in a field of the acquired data 415. Alternatively, a file name storing the raw data acquired by the field data acquisition unit 8 and an analysis result of the raw data are stored in a field of the acquired data 415. The analysis result includes the presence or absence and a factor of an abnormality, the presence or absence and a factor of an inspection defect, a current status, and the like.

The lot-serial number 416 is a number for uniquely identifying a completed product (or an intermediate product) as a result of performing the work indicated by the work result identification information 412.

The product quantity 417 is a quantity of products (or intermediate products) produced as a result of performing the work indicated by the work result identification information 412.

The start date and time 418 and the end date and time 419 are a date and time when the work indicated by the work result identification information 412 is actually started and a date and time when the work is actually ended. When the actual work is not started, the start date and time 418 in the work result information 410 is blank, and when the actual work is not completed, the end date and time 419 in the work result information 410 is blank. The scheduled start date and time 332 and the scheduled end date and time 333 in the work plan information 320 illustrated in FIG. 6B are compared with the start date and time 418 and the end date and time 419 in the work result information 410 to determine whether the work is delayed. The scheduled start date and time 332 and the scheduled end date and time 333 to be compared with the start date and time 418 and the end date and time 419 in the work result information 410 are the scheduled start date and time 332 and the scheduled end date and time 333 in the record of the work plan information 320 linked to the identification information stored in the work plan identification information 413.

The work plan information 320 illustrated in FIG. 6B and the work result information 410 illustrated in FIG. 8 form time series information for a state of a field.

### (Work Plan Management Unit 3)

FIG. 9 is a diagram illustrating a detailed configuration example of the work plan management unit 3.

The work plan management unit 3 includes a control unit 31, a communication unit 32, a work plan generation unit 33, and a work flow generation unit 34. The work plan management unit 3 includes an input unit 35a such as a keyboard and a mouse, and a display unit 35b such as a display.

The control unit 31 controls an overall operation of the work plan management unit 3, and transmits and receives information between the work monitoring unit 2 and the field management unit 6 via the communication unit 32.

The work plan generation unit 33 stores information in the work information 310 illustrated in FIG. 6A and the work plan information 320 illustrated in FIG. 6B based on an instruction input by the user U who creates the work plan. The work plan generation unit 33 stores information in the work information 310 and the work plan information 320 by, for example, the following procedures (A1) to (A8).

First, it is assumed that the factory information 110, the line information 120, the tool-equipment information 130, the robot information 140, the worker information 150, and the product information 160 are each already created by the user U. Further, it is assumed that the component information 170, the customer information 180, the field information 610, the position information 620, and the sensor information 630 are each already created by the user U.

(A1) The user U determines work required to produce a product. For example, the user U inputs work identification information and a work name via the input unit 35a, and the work plan generation unit 33 acquires the input work identification information and the work name.

(A2) A line on which the work in (A1) is to be performed is determined. This determination may be performed by the user U himself or herself by a computer executing the work plan management unit 3. At this time, the work plan generation unit 33 generates the line identification information 314 corresponding to the work name using the work identification information input in (A1). When the work name is input in (A1), the work plan generation unit 33 generates the work identification information 312 using the input work name.

(A3) Subsequently, the work plan generation unit 33 determines an order of performing the work. Accordingly, previous work and subsequent work for the work to be processed are set. Specifically, the user U inputs, via the input unit 35a, work names of previous work and subsequent work for work to be set. The work plan generation unit 33 acquires, from the work information 310, the work identification information 312 corresponding to the previous work and the subsequent work input in (A3). When the work identification information 312 corresponding to the previous work and the subsequent work is not present in the work information 310, the work plan generation unit 33 assigns work identification information to the work names of the previous work and the subsequent work. Then, the work plan generation unit 33 stores the work input in (A1) and the identification information of the previous work and the subsequent work input in (A3) in fields of the previous work identification information 315 and the subsequent work identification information 316 in the work information 310.

(A4) Next, the work plan generation unit 33 determines a name of specific work included in the work input in (A1). The work plan generation unit 33 generates identification information of the work to be processed. Further, the work plan generation unit 33 stores the name of the determined work and the identification information of the work in fields of the work identification information 323 and the work name 324 in the work plan information 320 illustrated in FIG. 6B. The name of the work may be input by the user U via the input unit 35a.

(A5) The work plan generation unit 33 determines a field where the work determined in (A4) is actually performed, the field worker P, a component, the tool-equipment 92, the robot 93, and the sensor 94. At this time, the pieces of information in the tool-equipment information 130 illustrated in FIG. 4A and the robot information 140 illustrated in FIG. 4B are displayed on the display unit 35b. Further, the pieces of information in the worker information 150 illustrated in FIG. 4C, the component information 170 illustrated in FIG. 5B, the field information 610 illustrated in FIG. 7A, the position information 620 illustrated in FIG. 7B, and the sensor information 630 illustrated in FIG. 7C are displayed on the display unit 35b. The user U selects, via the input unit 35a, the field identification information 612, the worker identification information 152, the component identification information 172, the tool-equipment identification information 132, the robot identification information 142, and the sensor identification information 632 to be used. The work plan generation unit 33 stores the selected information in corresponding fields of the work plan information 320 illustrated in FIG. 6B.

(A6) Subsequently, the work plan generation unit 33 determines a quantity of products (or intermediate products) to be produced by the work determined in (A1). Specifically, the user U inputs the quantity of products (or intermediate products) via the input unit 35a. The work plan generation unit 33 stores the input quantity in a field of the product quantity 331 in the work plan information 320.

(A7) The work plan generation unit 33 determines a scheduled start date and time and a scheduled end date and time using a standard time (ST) calculated in advance. The standard time is a scheduled work time and is known in advance. The user U inputs, based on the standard time, a scheduled start date and time and a scheduled end date and time via the input unit 35a or a computer that is the user terminal UT (see FIG. 11) or the like. The work plan generation unit 33 stores the input scheduled start date and time and scheduled end date and time in the scheduled start date and time 332 and the scheduled end date and time 3333 in the work plan information 320.

(A8) The work plan generation unit 33 generates identification information in the record of the work plan information 320 in which the pieces of information are input in (A3) and (A5) to (A7). The work plan generation unit 33 stores the generated identification information in a field of the work plan identification information 322 in the work plan information 320. That is, the work plan generation unit 33 sets the work plan identification information 322 in the record of the work plan information 320 in which the pieces of information are set in (A3) and (A5) to (A7). Since the three-dimensional link information 334 in the work plan information 320 is set by the work flow generation unit 34 to be described later, the three-dimensional link information 334 is not set at the stage (A8).

The processing procedures illustrated in (A1) to (A8) are examples, and the order is not limited as long as information necessary for generating the work information 310 and the work plan information 320 can be set.

When the work information 310 and the work plan information 320 are generated in the above-described procedure, the control unit 31 instructs the work flow generation unit 34 to generate a work flow.

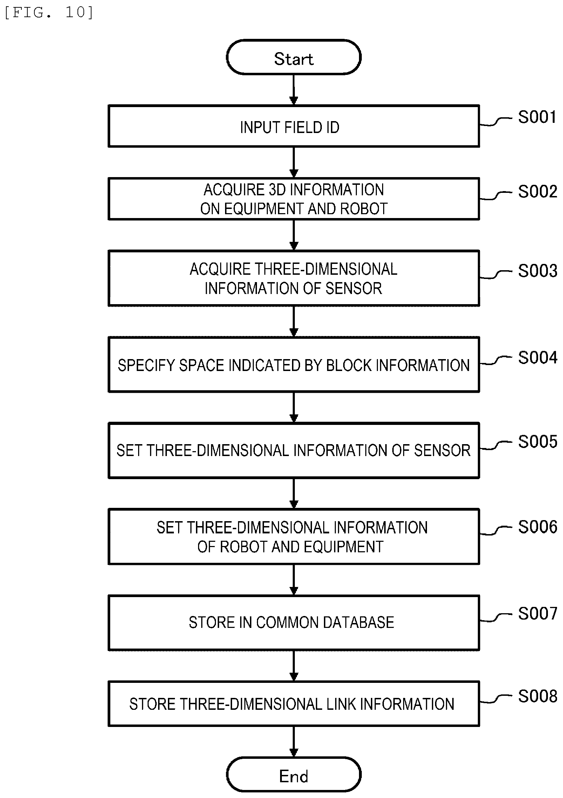

The work flow generation unit 34 generates, based on the generated work information 310 and work plan information 320, work flow information in which three-dimensional information of the field where each piece of work is performed and information on the field are associated with each other. As an example, the work flow generation unit 34 generates the work flow information in the procedure illustrated in FIG. 10.

FIG. 10 is a flowchart illustrating a processing procedure performed by the work flow generation unit 34 to generate a work flow. Reference is made to FIG. 9 as appropriate.

The user U inputs information on a field to be created. For example, the user U inputs a field name and field identification information via the input unit 35a (S001). When the field name is input, the work flow generation unit 34 acquires the field identification information 612 from the field information 610 illustrated in FIG. 7A.

The work flow generation unit 34 acquires the tool-equipment information 130 illustrated in FIG. 4A and the robot information 140 illustrated in FIG. 4B, and acquires the pieces of three-dimensional information 136 and 146 on the tool-equipment 92 and the robot 93 to be used (S002). The tool-equipment information 130 and the robot information 140 are generated and registered in advance. Specifically, the work flow generation unit 34 acquires the tool-equipment identification information 328 and the robot identification information 329 from the work plan information 320 illustrated in FIG. 6B using the field identification information input or acquired in step S001 as a key. The work flow generation unit 34 acquires the three-dimensional information 136 of the tool-equipment 92 from the tool-equipment information 130 illustrated in FIG. 4A using the acquired tool-equipment identification information 328 as a key. Similarly, the work flow generation unit 34 acquires the three-dimensional information 146 of the robot 93 from the robot information 140 illustrated in FIG. 4B using the acquired robot identification information 329 as a key.

Subsequently, the work flow generation unit 34 refers to the sensor information 630 illustrated in FIG. 7C and acquires the three-dimensional information 637 of the sensor 94 to be used (S003). The sensor information 630 is generated and registered in advance. Specifically, the work flow generation unit 34 acquires the sensor identification information 330 from the work plan information 320 illustrated in FIG. 6B using the field identification information input or acquired in step S001 as a key. The work flow generation unit 34 acquires the three-dimensional information 637 of the sensor 94 from the sensor information 630 illustrated in FIG. 7C using the acquired sensor identification information 330 as a key.

The work flow generation unit 34 refers to the position information 620 illustrated in FIG. 7B and specifies a space indicated by the block information 626 in a three-dimensional space indicated by the floor three-dimensional information 625 (S004). At this time, the work flow generation unit 34 acquires the block information 626 from the position information 620 using the field identification information input or acquired in step S001 as a key. The position information 620 is generated and registered in advance.

Further, the work flow generation unit 34 sets the three-dimensional information 637 of the sensor 94 acquired in step S003 in the space specified in step S004 at a position indicated by the installation position 636 of the sensor information 630 (S005).

As in step S005, the work flow generation unit 34 sets the three-dimensional information 146 of the robot 93 and the three-dimensional information 136 of the tool-equipment 92 acquired in step S002 in the space specified in step S004 (S006).

The work flow generation unit 34 stores the work flow information generated in steps S001 to S006 in the common database 1 (S007).

The work flow generation unit 34 stores the three-dimensional link information 334 for linking to the work flow information generated in steps S001 to S006 in the work plan information 320 illustrated in FIG. 6B (S008).

In this way, in the work flow information, the pieces of three-dimensional information 136 (see FIG. 4A), 146 (see FIG. 4B), and 637 (see FIG. 7C) of the tool-equipment 92, the robot 93, and the sensor 94 are associated with the position information.

The processing procedure in steps S001 to S008 is an example, and any procedure may be performed as long as the work flow information can be generated. All of the pieces of three-dimensional information 136, 146, and 637 of the tool-equipment 92, the robot 93, and the sensor 94 need not be included in the work flow information.

In the processing illustrated in steps S001 to S008, the three-dimensional information 637 of the sensor 94, the three-dimensional information 146 of the robot 93, and the three-dimensional information 136 of the tool-equipment 92 are set in the space specified in step S004, but the invention is not limited thereto. For example, the three-dimensional information 637 of the sensor 94, the three-dimensional information 146 of the robot 93, and the three-dimensional information 136 of the tool-equipment 92 may be linked to information on the space specified in step S004.

### (Work Monitoring Unit 2)

FIG. 11 is a diagram illustrating a detailed configuration example of the work monitoring unit 2.

The work monitoring unit 2 includes a control unit 21, a user communication unit 22, a system communication unit 23, a virtual production monitoring model processing unit 24, and a state information superimposing unit 25. The work monitoring unit 2 further includes a three-dimensional basic information generation unit 26, a display processing unit 28, and a setting information management unit 27.

The control unit 21 controls an overall operation of the work monitoring unit 2. The control unit 21 transmits and receives, via the system communication unit 23, information among the work plan management unit 3, the work result management unit 4, and one or more field management units 6 provided in each factory F. The control unit 21 transmits and receives, via the user communication unit 22, information among the user U1 (U) in the business management department who is in an office, the user U2 (U) in the design department who is working from home, and the like. In the example illustrated in FIG. 11, the control unit 21 communicates with the business management department and the design department, and may also communicate with the user U3 (U) as the customer illustrated in FIG. 1 or the user U4 (U) as the supplier. Each user U can access the work monitoring unit 2 via the user terminal UT. The user terminal UT is a terminal for inputting various types of information and displaying the information generated by the work monitoring unit 2. The user terminal UT may be a PC, a tablet terminal, a smartphone, or the like.

Although the user communication unit 22 and the system communication unit 23 can be integrated into one communication unit, it is desirable to separate the user communication unit 22 and the system communication unit 23 in consideration of security and communication performance. The user communication unit 22 may use the Internet N (see FIG. 1), and the system communication unit 23 may use a dedicated line or an in-house network.

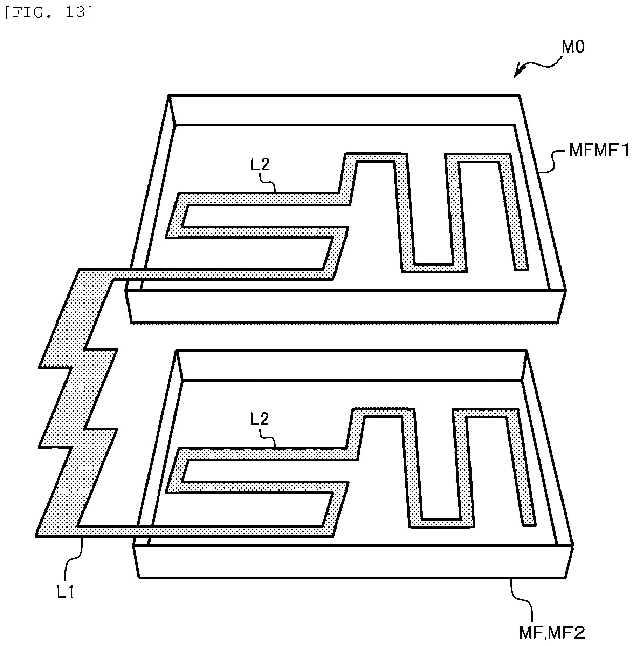

The three-dimensional basic information generation unit 26, which is the first virtual reality generation unit, generates three-dimensional basic information M0 (see FIG. 13) serving as a base of a virtual field. The three-dimensional basic information M0 is three-dimensional information obtained by virtually overlooking the field.

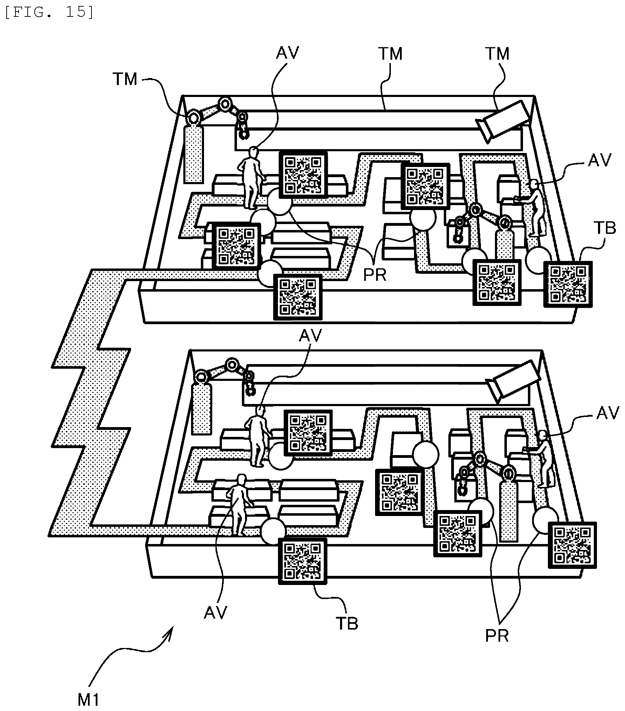

The first virtual reality generation unit and the virtual production monitoring model processing unit 24, which is the second virtual reality generation unit, sets the pieces of three-dimensional information of the tool-equipment 92, the robot 93, the sensor 94, the field worker P, and the like scheduled to be used in each piece of work on a three-dimensional space indicated by the three-dimensional basic information M0 generated by the three-dimensional basic information generation unit 26. The three-dimensional information of the field worker P may be an avatar or the like, or may be three-dimensional information generated based on information obtained by capturing an image by the three-dimensional camera 94d. Accordingly, the virtual production monitoring model processing unit 24 generates a virtual production monitoring model M1 (FIG. 15) including a target to be monitored by the work monitoring support system Z.

The state information superimposing unit 25, which is a reflection unit, superimposes a progress state and operation state on the virtual production monitoring model M1 generated by the virtual production monitoring model processing unit 24 using the work plan information 320 (see FIG. 6B) and the work result information 410 (see FIG. 8), which are the time series information.

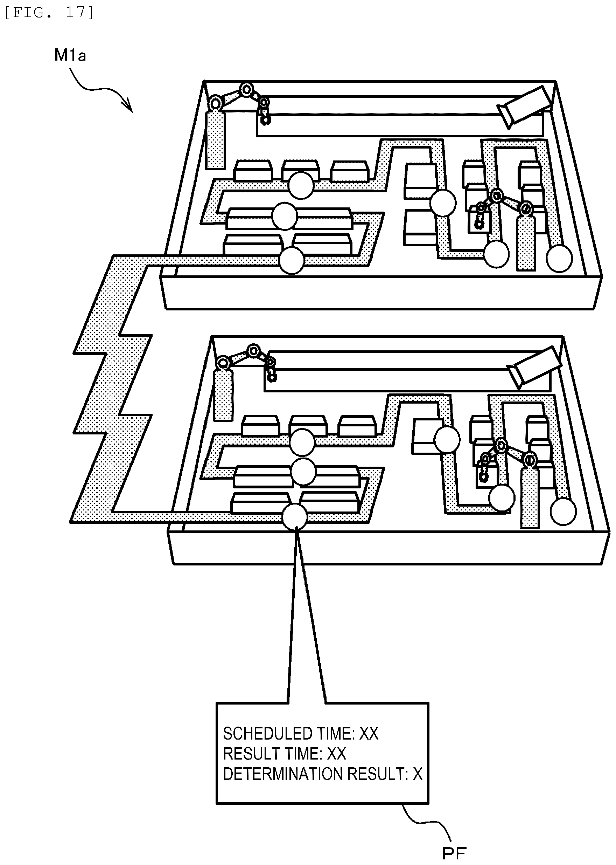

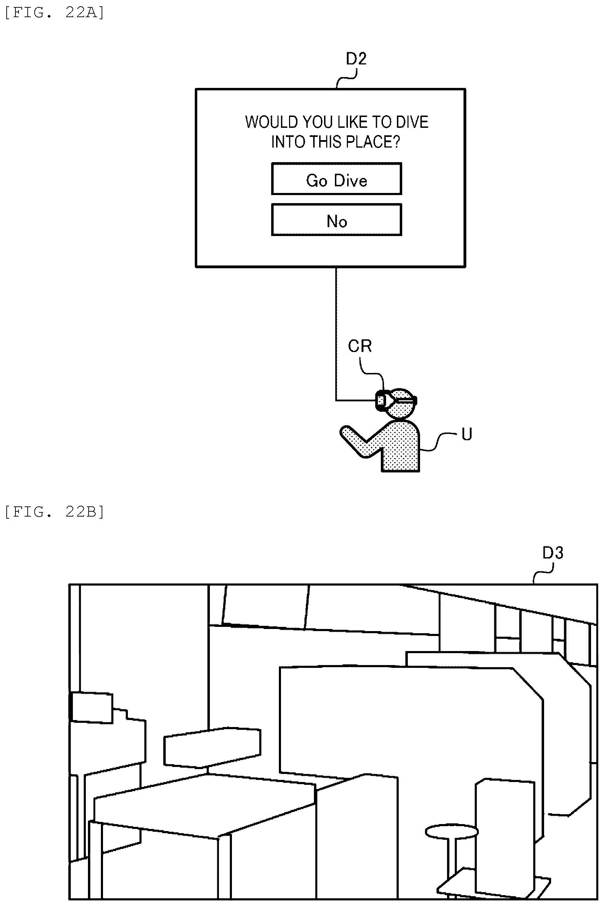

The display processing unit 28 generates display data based on the virtual production monitoring model M1 and a virtual production monitoring model M1a (see FIG. 17) on which the work progress state and operation state are superimposed. The display data is data to be displayed on the VR terminal CR (see FIG. 1) used by the user U1 in the business management department who is in an office, the user U2 in the design department who is working from home, and the like via the user communication unit 22. The display processing unit 28 sends the display data to a PC or a tablet terminal (for example, the user terminal UT illustrated in FIG. 11), or the VR terminal CR used by the user U. Accordingly, the virtual production monitoring model M1 or the like, and a diving three-dimensional screen D3 (see FIG. 22B) are displayed on a screen of a PC or a tablet terminal (for example, the user terminal UT illustrated in FIG. 11), or the VR terminal CR used by the user U.

The setting information management unit 27 manages information such as a display method of the display data generated by the display processing unit 28 and setting information of the three-dimensional basic information M0.

### (Three-dimensional Basic Information Generation Processing)

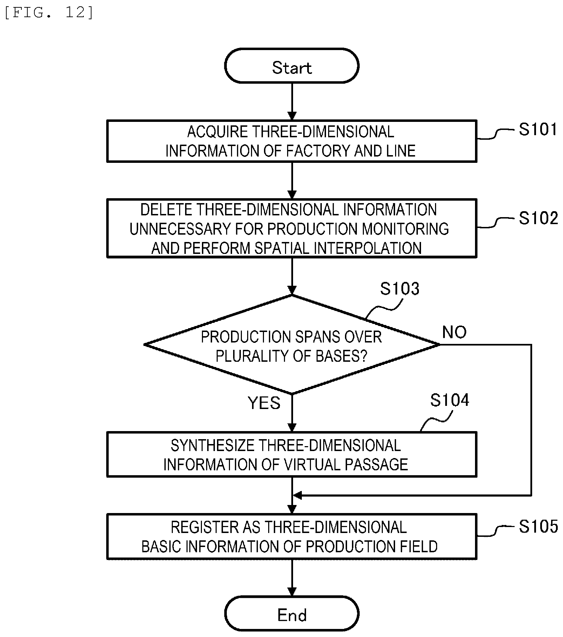

FIG. 12 is a flowchart illustrating a procedure performed by the three-dimensional basic information generation unit 26 to generate the three-dimensional basic information M0 illustrated in FIG. 13. Reference is made to FIGS. 1 and 2 as appropriate.

First, the control unit 21 instructs the three-dimensional basic information generation unit 26 to generate the three-dimensional basic information M0. Then, the three-dimensional basic information generation unit 26 refers to the factory information 110 illustrated in FIG. 3A and the line information 120 illustrated in FIG. 3B. Then, the three-dimensional basic information generation unit 26 acquires the three-dimensional information 115 in the factory information 110 and the three-dimensional information 126 in the line information 120 (S101). Before step S101, the user U designates, via the user terminal UT, the factory F for which the three-dimensional basic information M0 is to be generated. Subsequently, the three-dimensional basic information generation unit 26 acquires the three-dimensional information 126 of a line from the line information 120 using, as a key, the line identification information 116 corresponding to the factory identification information 112 of the designated factory F.

Next, the three-dimensional basic information generation unit 26 deletes, as necessary, three-dimensional information unnecessary for production monitoring from the three-dimensional information 115 of the factory F and the three-dimensional information 126 of the line. Then, the three-dimensional basic information generation unit 26 interpolates a space that becomes discontinuous due to the deletion (S102). For example, the three-dimensional basic information generation unit 26 deletes three-dimensional information of the tool-equipment 92, a room, a warehouse, and the like that are not in use. The deletion may be performed by the user U via the user terminal UT or may be performed by a computer. For example, the computer may determine whether deletion is necessary based on attribute information attached to the three-dimensional information or the like.

Next, the three-dimensional basic information generation unit 26 determines whether product production spans a plurality of factories F, a plurality of buildings, and a plurality of floors (a plurality of bases) (S103). Whether the product production spans the plurality of buildings and the plurality of floors is determined, based on the field information 610 illustrated in FIG. 7A, the position information 620 illustrated in FIG. 7B, and the like, by the three-dimensional basic information generation unit 26 by the user U or by the computer executing the work monitoring unit 2.

When the product production does not span a plurality of bases (S103 → NO), the three-dimensional basic information generation unit 26 advances the processing to step S105.

When the product production spans a plurality of bases (S103 → YES), the three-dimensional basic information generation unit 26 generates three-dimensional information of a passage (a virtual passage L1 (see FIG. 13)) virtually connecting the factory F, the building, and the floor. Then, the three-dimensional basic information generation unit 26 synthesizes the generated three-dimensional information of the virtual passage L1 with the three-dimensional information generated in step S103 so as not to cause discontinuity in the three-dimensional information (S104).

The three-dimensional basic information generation unit 26 stores, in the common database 1, the three-dimensional information generated in step S105 as the three-dimensional basic information M0 of the field (S105).

### (Three-dimensional Basic Information M0 of field)

FIG. 13 is an image diagram illustrating the three-dimensional basic information M0 of the field that is generated by the three-dimensional basic information generation procedure illustrated in FIG. 12.

In the example of the three-dimensional basic information M0 illustrated in FIG. 13, it is assumed that a product is produced spanning two factories F (see FIG. 1) located at separate places. The factory F (see FIG. 1) is illustrated in FIG. 13 as three-dimensional factory information MF1 and MF2 of the factory F. Each piece of the three-dimensional factory information MF indicates work line information L2 which is information on a line. Further, the respective pieces of three-dimensional factory information MF1 and MF2 are connected by the virtual passage L1. Accordingly, a three-dimensional field obtained by overlooking fields (the factories F in the example in FIG. 13) that are actually located at separate places can be generated and displayed. With such three-dimensional basic information M0, the user U can easily grasp a whole image of the production.

### (Virtual Production Completion Model Generation Procedure)

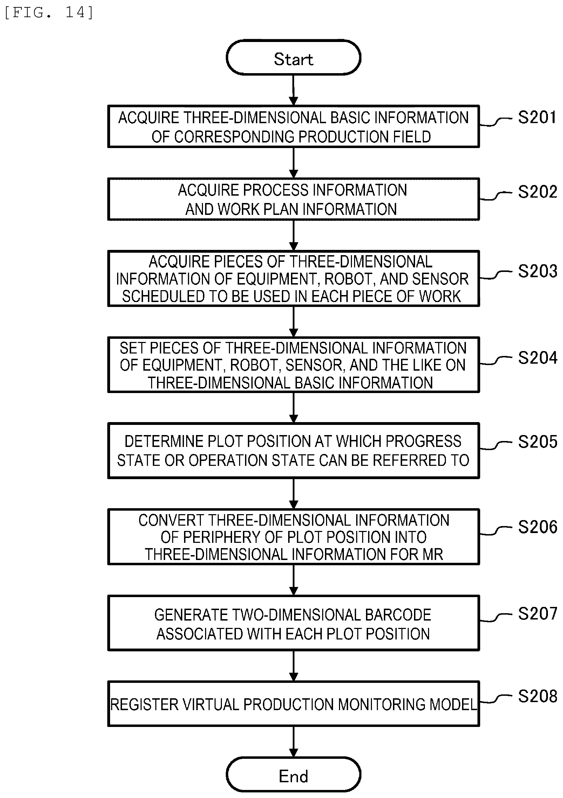

FIG. 14 is a flowchart illustrating a processing procedure performed by the virtual production monitoring model processing unit 24 to generate the virtual production monitoring model M1 (see FIG. 15) which is the first virtual reality image.

First, the control unit 21 instructs the virtual production monitoring model processing unit 24 to generate the virtual production monitoring model M1. After receiving the instruction, the virtual production monitoring model processing unit 24 acquires, from the common database 1, the three-dimensional basic information M0 (see FIG. 13) of the field corresponding to a generation target (S201).

The virtual production monitoring model processing unit 24 refers to the work information 310 illustrated in FIG. 6A and the work plan information 320 illustrated in FIG. 6B (S202).

Subsequently, the virtual production monitoring model processing unit 24 acquires, based on the information referred to in step S202, the pieces of three-dimensional information 136 (see FIG. 4A), 146 (see FIG. 4B), and 637 (see FIG. 7C) of the tool-equipment 92, the robot 93, and the sensor 94 used in the factory F indicated by the three-dimensional basic information M0 (S203). Specifically, the virtual production monitoring model processing unit 24 acquires flow information by tracing the three-dimensional link information 334 in the work plan information 320 illustrated in FIG. 6B.

Next, the virtual production monitoring model processing unit 24 sets the pieces of three-dimensional information 136 (see FIG. 4A), 146 (see FIG. 4B), and 637 (see FIG. 7C) of the tool-equipment 92, the robot 93, and the sensor 94 that are acquired in step S202 in the three-dimensional basic information M0 acquired in step S201 (S204). The virtual production monitoring model processing unit 24 acquires, by the above-described processing in FIG. 10, the work flow information linked to the three-dimensional link information 334 in the work plan information 320 illustrated in FIG. 6B. In the work flow information, the pieces of three-dimensional information 136 (see FIG. 4A), 146 (see FIG. 4B), and 637 (see FIG. 7C) of the tool-equipment 92, the robot 93, and the sensor 94 are stored in a form associated with the position information. Therefore, the virtual production monitoring model processing unit 24 sets the pieces of three-dimensional information 136, 146, and 637 of the tool-equipment 92, the robot 93, and the sensor 94 according to the position information in the work flow information.

Next, the virtual production monitoring model processing unit 24 determines a plot position PR (see FIG. 15) at which the progress state and operation state can be referred to (S205). The plot position PR is a place of a base in product production, such as a place where a component is carried in, or a place where an inspection is performed. As will be described later, the plot position PR is also a position at which diving three-dimensional information which is the second virtual reality image can be displayed. The plot position PR is associated with the field managed by the field information 610 illustrated in FIG. 7A. That is, the plot position PR is associated with the field identification information 612 in FIG. 7A.

Specifically, the virtual production monitoring model processing unit 24 refers to the field information 610 in the work plan information 320 acquired in step S202. The virtual production monitoring model processing unit 24 selects all or a part of corresponding field identification information 702 in the field information 610 as the plot position PR necessary for production. This means that the field identification information 702 corresponds to the field in the factory F that is the generation target of the virtual production monitoring model M1. When a part of the field identification information 702 is selected, the user U may select the field identification information 702 via the user terminal UT.

Next, the virtual production monitoring model processing unit 24 specifies a position of a periphery of the plot position PR determined in step S205 in the three-dimensional basic information M0 generated in step S204. The virtual production monitoring model processing unit 24 extracts three-dimensional information on the specified position of the periphery of the plot position PR. Thereafter, the virtual production monitoring model processing unit 24 converts the extracted three-dimensional information on the periphery of the plot position PR into three-dimensional information (diving three-dimensional information) of a mixed reality (MR) space (S206). As a method for converting the three-dimensional information into the diving three-dimensional information, a technique in related art or a commercially available product is used. The block information 626 in the position information 620 illustrated in FIG. 7B may be used as the periphery of the plot position PR to be extracted. Not only the periphery of the plot position PR but also all the three-dimensional basic information M0 generated in step S204 may be converted into the diving three-dimensional information.

Thereafter, the virtual production monitoring model processing unit 24 generates a dedicated two-dimensional barcode TB (see FIG. 15) as a marker associated with each plot position PR determined in step S205 (S207). In step S207, a dedicated marker, a barcode, or the like may be generated in addition to the two-dimensional barcode TB.

Finally, the virtual production monitoring model processing unit 24 stores, as one virtual production monitoring model M1, the three-dimensional basic information M0, the diving three-dimensional information, and the two-dimensional barcode TB in the common database 1 (S208).

### (Virtual Production Monitoring Model M1)

FIG. 15 is an image diagram illustrating the virtual production monitoring model M1 of the field generated by the virtual production monitoring model generation procedure.

The virtual production monitoring model M1 is displayed by the display processing unit 28 illustrated in FIG. 11, and similarly, the virtual production monitoring model M1 described below is displayed by the display processing unit 28 illustrated in FIG. 11 on a display screen of a PC or a tablet terminal (for example, the user terminal UT illustrated in FIG. 11) used by the user U or on the VR terminal CR worn by the user U. As described above, the user U can view the virtual production monitoring model M1 using a PC or a tablet terminal (for example, the user terminal UT illustrated in FIG. 11) used by the user U or the VR terminal CR worn by the user U. In the following description, it is assumed that the virtual production monitoring model M1 is displayed on the VR terminal CR.

In the virtual production monitoring model M1 illustrated in FIG. 15, three-dimensional images TM of the tool-equipment 92, the robot 93, and the sensor 94 (see FIG. 2 for each) to be used are set in the three-dimensional basic information M0 illustrated in FIG. 13, and the plot position PR is further displayed. In the virtual production monitoring model M1 illustrated in FIG. 15, an avatar AV of the field worker P is displayed. In the example illustrated in FIG. 15, the three-dimensional images TM of the three-dimensional camera 94d as the sensor 94 and the robot 93 are displayed. Further, the two-dimensional barcode TB is displayed so as to correspond to the plot position PR. The two-dimensional barcode TB may not be displayed. As will be described later, the two-dimensional barcode TB is a marker that associates the virtual production monitoring model M1 with the diving three-dimensional screen D3 (see FIG. 22B), and is displayed on the virtual production monitoring model M1 as illustrated in FIG. 15. The avatar AV of the field worker P can switch whether to display. Further, avatars AV of all the field workers P may be displayed. Alternatively, several (for example, 10) field workers P may be collectively displayed as one avatar AV.

The plot position PR may be color-coded according to a type of work. The virtual production monitoring model M1 displayed on the VR terminal CR or the like may be rotationally displayed in a screen by a line-of-sight operation or the like.

In this way, the virtual production monitoring model M1 is a virtual three-dimensional image of a configuration of the field. In the example illustrated in FIG. 15, the plot position PR at which the diving three-dimensional information, which is the second virtual reality image, can be displayed is displayed in the first virtual reality image. Incidentally, as illustrated in FIG. 17 and the like, the plot position PR is also a base for displaying the time series information.

### (State Information Superimposing Processing)

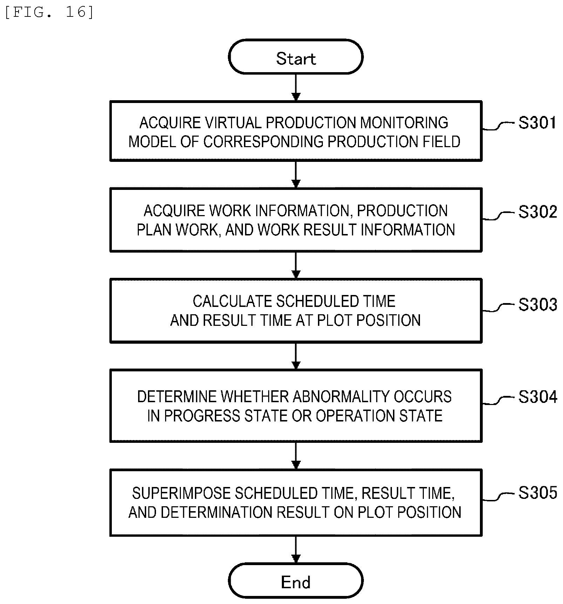

FIG. 16 is a flowchart illustrating a procedure of state information superimposing processing of superimposing state information of work on the virtual production monitoring model M1 generated by the processing illustrated in FIG. 14. The processing illustrated in FIG. 16 may be performed for each piece of work.

First, the control unit 21 instructs the state information superimposing unit 25 to superimpose (map) information on the work plan or the progress state and operation state on the virtual production monitoring model M1 (FIG. 15). After receiving the instruction, the state information superimposing unit 25 acquires, from the common database 1, the virtual production monitoring model M1 of a field corresponding to a superimposition target (S301).

Next, the state information superimposing unit 25 refers to the work information 310 illustrated in FIG. 6A, the work plan information 320 illustrated in FIG. 6B, and the work result information 410 illustrated in FIG. 8 (S302). When actual work is started, the state information superimposing unit 25 generates the work result information 410 by the work result management unit 4 collecting information from the sensor 94, the field information 610 illustrated in FIG. 7A, and the like based on the work plan information 320.

Next, the state information superimposing unit 25 uses the work result information 410 to calculate a cumulative scheduled time and a result time for each piece of work at the plot position PR set on the virtual production monitoring model M1 (S303). The cumulative scheduled time and the result time are a cumulative scheduled time and a result time from first work to certain work.

The production analysis and simulator unit 5 analyzes the scheduled time and the result time calculated in step S303. The production analysis and simulator unit 5 further analyzes information on the acquired data 415 in the work result information 410. The production analysis and simulator unit 5 determines whether an abnormality occurs in the progress state or the operation state (S304). That is, the production analysis and simulator unit 5 compares the work plan information 320 illustrated in FIG. 6B with the work result information 410 illustrated in FIG. 8, and determines whether an abnormality occurs in the progress state or the operation state. For example, in the following cases, the production analysis and simulator unit 5 determines that an abnormality occurs in the progress state or the operation state.

(C1) Although the scheduled start date and time 332 in the work plan information 320 has passed, the start date and time 418 in the work result information 410 in the work result information 410 is blank.

(C2) Although the scheduled end date and time 333 in the work plan information 320 has passed, the end date and time 419 in the work result information 410 in the work result information 410 is blank.

The production analysis and simulator unit 5 determines, based on the content of the acquired data 415 in the work result information 410, whether an abnormality occurs.

Finally, the state information superimposing unit 25 superimposes and displays all or a part of information on results calculated or analyzed in steps S303 and S304 on the virtual production monitoring model M1 acquired in step S301. When a part of the results calculated or analyzed in steps S303 and S304 is displayed, the user U may select information displayed on a PC or a tablet terminal (for example, the user terminal UT illustrated in FIG. 11), or the VR terminal CR.

That is, the production analysis and simulator unit 5 superimposes the scheduled time and the result time calculated in step S303 and the determination result in step S304 on the plot position PR (see FIG. 15) in the virtual production monitoring model M1 (S305). The superimposition method may be any display method as long as the scheduled time, the result time, and the determination result can be determined. For example, the superimposition may be performed by a method of displaying a speech bubble at the plot position PR and describing information in the speech bubble. Alternatively, the superimposition may be performed by a method of displaying a "status button" or a "menu button" at the plot position PR and displaying detailed information when the button is designated. The virtual production monitoring model M1a (see FIG. 17) in which the superimposition is performed in step S305 is stored in the common database 1.

### (Display of Plot Position Information PF)

FIG. 17 is an image diagram illustrating the virtual production monitoring model M1a of the field that is generated by the processing procedure illustrated in FIG. 16. In FIG. 17 and subsequent drawings, it is assumed that the avatar AV (see FIG. 15) of the field worker P is not displayed.

In the example of the virtual production monitoring model M1a illustrated in FIG. 17, plot position information PF such as a scheduled time, a result time, and a determination result which are the time series information on the field is superimposed in a speech bubble on the virtual production monitoring model M1 illustrated in FIG. 15. In order to avoid complication, in FIG. 17, the reference numerals of the elements described in FIG. 15 are omitted, and the two-dimensional barcode TB (see FIG. 15) is not displayed. As described above, in the virtual production monitoring model M1a illustrated in FIG. 17, the time series information of the state of the field is reflected in the first virtual reality image. That is, in the virtual production monitoring model M1a illustrated in FIG. 17, the first virtual reality image in which the time series information is reflected is displayed on a terminal (a PC or a tablet terminal (for example, the user terminal UT illustrated in FIG. 11), or the VR terminal CR) used by the user U. As described above, in the following description, it is assumed that the virtual production model M1a is displayed on the VR terminal CR. The same applies to virtual production models M1b to M1h to be described later.

With the virtual production monitoring model M1a illustrated in FIG. 17, the user U can visually grasp an overview and a whole image related to the product production. Further, the user U can check the progress state and operation state, the analysis result, and the like of each piece of work together with the field.

### (Progress Information Superimposing Processing)

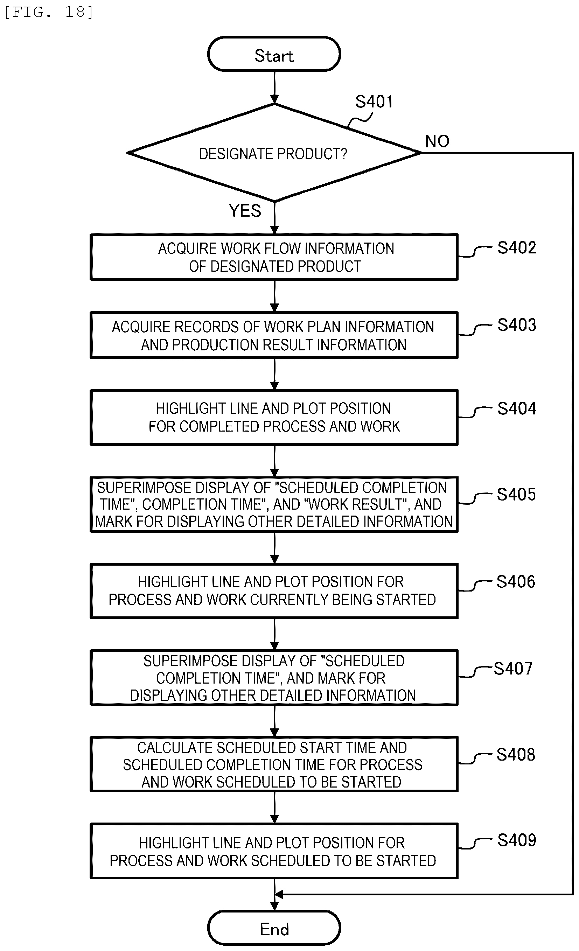

FIG. 18 is a flowchart illustrating a processing procedure for superimposing progress information.

The control unit 21 designates a specific product to the state information superimposing unit 25 according to an instruction or the like of the user U via the user terminal UT (S401). The processing in step S401 is performed, for example, in a state where the virtual production monitoring model M1a illustrated in FIG. 17 is displayed as a result of performing the processing illustrated in FIG. 16.

When the specific product is not designated (S401 → NO), the work monitoring support system Z ends the processing.

When the specific product is designated (S401 → YES), the state information superimposing unit 25 acquires work flow information of the specific product designated in step S401 (S402). Specifically, the state information superimposing unit 25 acquires the work identification information 167 included in the product information 160 illustrated in FIG. 5A using, as a key, the product identification information 162 of the designated product. The state information superimposing unit 25 acquires a record including the work identification information 312 corresponding to the acquired work identification information 167 in the work information 310 illustrated in FIG. 6A.

Next, the state information superimposing unit 25 acquires records of the work plan information 320 (see FIG. 6B) and the work result information 410 (see FIG. 8) that are related to the product (S403). Specifically, the state information superimposing unit 25 acquires the work plan identification information 317 stored in the record acquired in step S402. Further, the state information superimposing unit 25 acquires a record including the work plan identification information 413, which corresponds to the work plan identification information 317 acquired from the work plan information 320, in the work result information 410.

The state information superimposing unit 25 highlights, based on the record in the acquired work result information 410, the work line information L2 and the plot position PR on the virtual production monitoring model M1a that are related to the already completed work (S404). For example, the state information superimposing unit 25 colors red as the highlighting. The already completed work is work for which date and time information is stored in the end date and time 419 in the work result information 410.

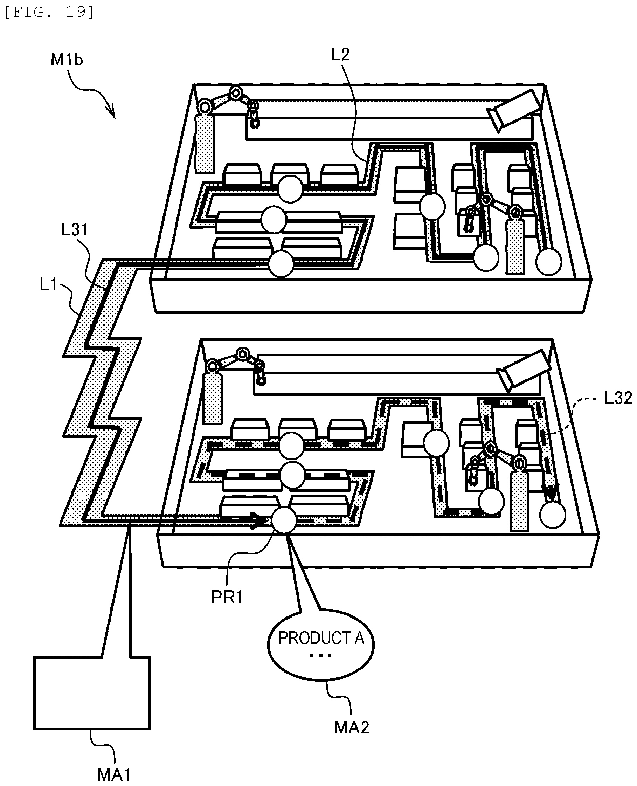

Subsequently, the state information superimposing unit 25 superimposes, on the virtual production monitoring model M1a, at least a display of a scheduled completion time, a result completion time, and a work result, and a mark for displaying other detailed information (S405). As a result, the virtual production monitoring model M1b illustrated in FIG. 19 is displayed on the VR terminal CR (see FIG. 1). The mark includes speech bubbles MA1 and MA2 (see FIG. 19), a button, a menu, and the like. The state information superimposing unit 25 performs the processing in step S405 with reference to the work plan information 320 illustrated in FIG. 6B, the work result information 410 illustrated in FIG. 8, and the like.

Next, the state information superimposing unit 25 specifies work currently being started (currently being performed), and highlights the work line information L2 and the plot position PR in the virtual production monitoring model M1b in a manner different from that in step S404 (S406). An alternative highlighting is, for example, coloring in yellow. The work currently being started is work for which date and time information is stored in the start date and time 418 in the work result information 410, but no date and time information is stored in the end date and time 419.

The state information superimposing unit 25 superimposes, on the virtual production monitoring model M1b, at least a display of a scheduled completion time and a mark for displaying other detailed information (S407). The mark includes a speech bubble MA3 (see FIG. 19), a button, a menu, and the like. The scheduled completion time is a difference between the scheduled end date and time 333 in the work plan information 320 illustrated in FIG. 6B and the current date and time.

Next, the state information superimposing unit 25 calculates a scheduled start time and a scheduled completion time for each plot position PR for work scheduled to be started for a target product (S408).

The virtual production monitoring model processing unit 24 highlights a line to be started and the plot position PR on the virtual production monitoring model M2b in a manner different from that in steps S404 and S406 (S407). In step S407, the virtual production monitoring model processing unit 24 colors the line and the plot position PR in green, for example. A mark (a speech bubble, a button, a menu, or the like) for displaying the scheduled start time, the scheduled completion time, or the like may be displayed for the work scheduled to be started.

### (Display of Work Completed and Scheduled to Start)

FIG. 19 is an image diagram illustrating the virtual production monitoring model M1b displayed as a result of performing the processing illustrated in FIG. 18. In FIG. 19, in order to avoid complication, reference numerals are omitted for elements already described in FIGS. 15 and 17. It is assumed that the two-dimensional barcode TB illustrated in FIG. 15 is not displayed.

In the virtual production monitoring model M1b illustrated in FIG. 19, the work line information L2 of the completed work and the virtual path L1 are illustrated with solid line work route information L31, which is information (a line) of the work that is already performed. In the virtual production monitoring model M1b illustrated in FIG. 19, the work line information L2 of the work to be started (scheduled to be started) is illustrated with dashed line work route information L32 as information (a line) of the work to be performed. A plot position PR1 indicates information on the work currently being started. In the example illustrated in FIG. 19, the plot position PR1 at which the work is currently being started is illustrated, and no work route information of the work currently being started is illustrated. The work route information of the work currently being started may be displayed in a highlighted manner different from the solid line work route information L31 of the completed work and the dashed line work route information L32 of the work to be started. Incidentally, the expression "currently being started" means that the work is currently being performed.

The speech bubble MA1 displays at least a display of a scheduled completion time, a result completion time, and a work result for the already completed work, and other detailed information. The speech bubble MA1 is a type of mark displayed in step S405 in FIG. 18. The speech bubble MA2 displays a display of a scheduled completion time for the work currently being started, and other detailed information. The speech bubble MA2 is information on the work currently being started (currently being performed). The speech bubble MA3 is a type of mark displayed in step S407 in FIG. 18.

The pieces of work route information L31 and L32 and the speech bubbles MA1 and MA2 are time series information and are information on the progress state of the work being performed at the field. As described above, in the virtual production monitoring model M1b illustrated in FIG. 19, the information on the progress state of the work being performed at the field (the time series information) is displayed.

As described above, in the example illustrated in FIG. 19, the information on the work that is already performed (the work route information L31), the information on the work to be performed (the work route information L32), and the information on the work currently being started (the speech bubble MA2) are displayed in different display methods on the virtual production monitoring model M1b. By performing the display as illustrated in FIG. 19, the user U (see FIG. 1) can overlook and visually check the information on the field and the progress state and operation state in a state of being superimposed for each product. Accordingly, the user U can check at a glance a process performed in the past, a current production position, and a process in which production progresses in the future.

### (Plot Position Management Information 210)

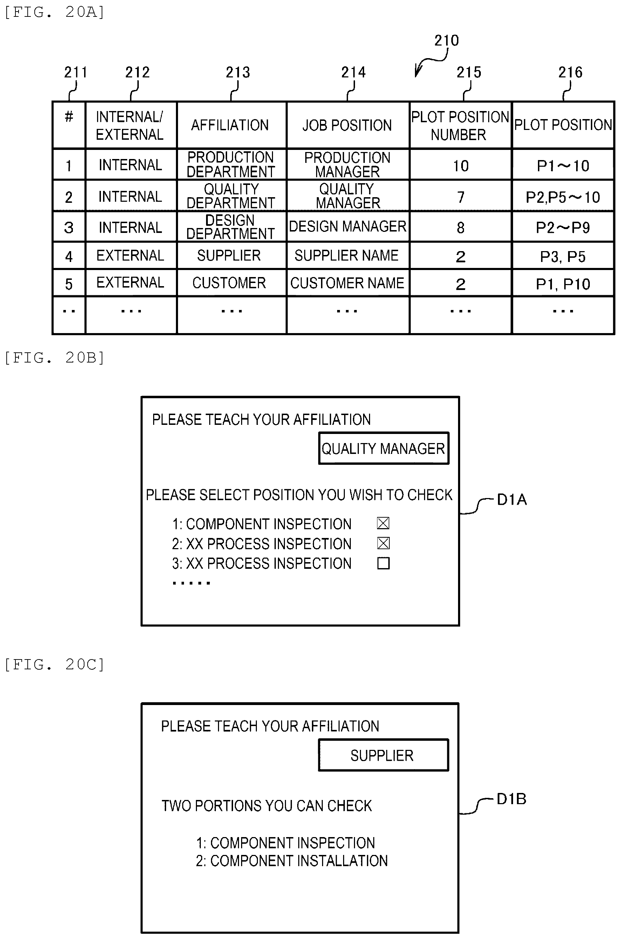

FIG. 20A is a diagram illustrating a data example of the plot position management information 210 managed by the work monitoring unit 2. Reference is made to FIG. 11 as appropriate.

The work monitoring unit 2 can change the plot position PR set on the virtual production monitoring model M1 illustrated in FIG. 15 and the like and the number of plot positions PR according to the type of the user U who checks the progress information and operation state. Therefore, the plot position management information 210 according to the type of the user U is managed by the setting information management unit 27. The type of the user U includes a job position of the user U, whether the user U is an internal person or an external person, and the like. That is, the information that can be viewed on the virtual production monitoring model M1 is divided according to the type of the user U.

The plot position management information 210 includes a plot position registration number 211, internal/external information 212, an affiliation 213, a job position 214, a plot position number 215, and a plot position 216.

The plot position registration number 211 is a number uniquely assigned to information (a record) registered in the plot position management information 210.

The internal/external information 212, the affiliation 213, and the job position 2144 are information on the type of the user U.

The plot position number 215 and the plot position 216 may be determined in advance as default values based on information input by the user U via the user terminal UT (see FIG. 11). Alternatively, the user U may set plot position management setting screens D1A and D1B illustrated in FIGS. 20B and 20C each time the virtual production monitoring model M1 is displayed.

### (Plot Position Management Setting Screen)

FIGS. 20B and 20C are diagrams illustrating examples of the plot position management setting screens D1A and D1B.

The plot position management setting screen D1A illustrated in FIG. 20B is a plot position management setting screen for a quality manager. The plot position management setting screen D1A illustrated in FIG. 20B allows the user U to select a position (the plot position PR) that a quality manager of interest wishes to check. The selected information is stored in the plot position management information 210 illustrated in FIG. 20A.

On the other hand, the plot position management setting screen D1B illustrated in FIG. 20C is a plot position setting screen for the user U4 (see FIG. 1) who is a supplier. Since the user U4 who is a supplier is an external person, the plot position PR (see FIG. 15) that can be viewed is fixed.

In this way, by dividing the plot position PR that can be viewed depending on the type of the user U, the user U can check only the plot positions PR that the user U needs in the virtual production monitoring model M1 (see FIG. 15). The user U operating the work monitoring support system Z may be provided with an access authority for each user U in consideration of security. In this way, a disclosure range of the information can be adjusted.

According to FIGS. 20A to 20C, the displayed plot position PR changes depending on the type of the user U.

According to the first embodiment, by generating and displaying the virtual production monitoring model M1 which is virtual realization in which the progress state and operation state of the production are associated with the field, a person concerned the production can easily check the progress state and the operation state of the production. Accordingly, not only the production state of the individual process work but also the entire image and the overview of the production can be easily grasped. According to the first embodiment, a portion that needs to be checked can be accurately checked while reducing the burden on the field worker P.

### <Second Embodiment>

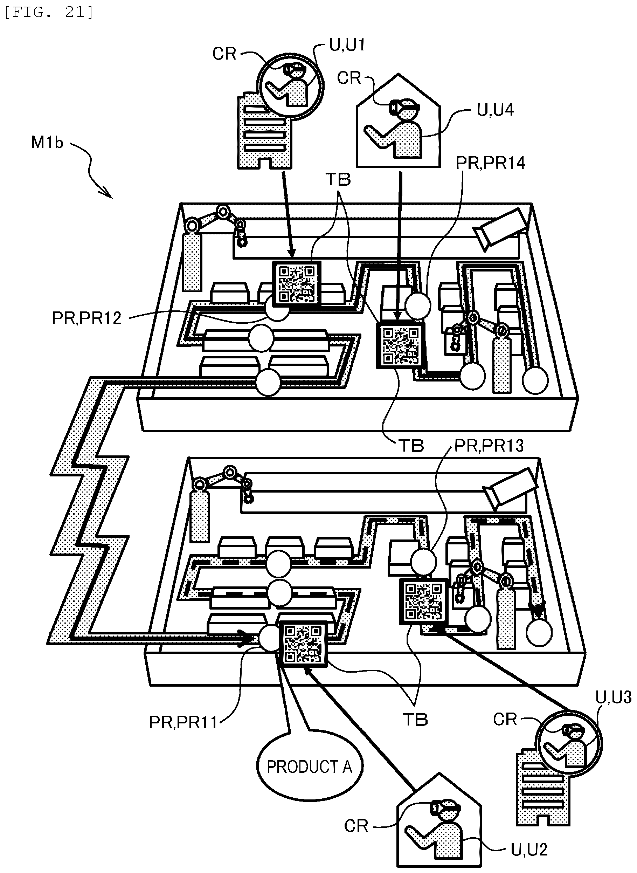

Next, a second embodiment will be described with reference to FIGS. 21 to 25.

In the first embodiment, the virtual production monitoring model M1 (FIG. 15) is generated and displayed for overlooking a field, but in the second embodiment, a technique for diving into the virtual production monitoring model M1 will be described. The diving is to generate a virtual space where the user U is as if present in the virtual production monitoring model M1.

### (Image of Diving into Virtual Production Monitoring Model M1)

FIG. 21 is an image diagram related to diving into the virtual production monitoring model M1.

In FIG. 21, the two-dimensional barcode TB is superimposed on a part of the plot position PR displayed in the virtual production monitoring model M1b illustrated in FIG. 19. In FIG. 21, in order to avoid complication, description of elements that are not necessary for the description is omitted.

In the example illustrated in FIG. 21, each of a plurality of users U dives into the virtual production monitoring model M1b from different plot positions PR using the VR terminal CR or a PC or a tablet terminal (for example, the user terminal UT illustrated in FIG. 11) used by the user U. In the example illustrated in FIG. 21, the plurality of users U are the user U2 who is working from home, the user U1 in a business management department, the user U4 who is a supplier, and the user U3 who is a customer. For example, the user U2 who is working from home is diving at a plot position PR11. The user U1 in the business management department is diving at a plot position PR12. The user U4 who is a supplier is diving at a plot position PR14, and the user U3 who is a customer is diving at a plot position PR13. The VR terminal CR, a PC or a tablet terminal used by the user U, or the like can be used for the processing for diving. The processing for diving includes reading the two-dimensional barcode TB, displaying the diving three-dimensional screen D3 (see FIG. 22B), and other processing illustrated in FIGS. 21 to 31, 33 to 35B, and the like. The PC, the tablet terminal, or the like used by the user U is, for example, the user terminal UT illustrated in FIG. 11. In the following description, it is assumed that the VR terminal CR is used when the processing for diving is performed. When the two-dimensional barcode TB is read by the PC, the two-dimensional barcode TB displayed on the PC is clicked.

As illustrated in FIG. 21, the two-dimensional barcode TB is superimposed on each of the plot positions PR11 to PR14. When each user U reads the two-dimensional barcode TB with the VR terminal CR, a dived result (virtual space) is displayed on a screen of the VR terminal CR. As illustrated in FIGS. 20A to 20C, the plot position PR at which the two-dimensional barcode TB is displayed (diving is possible) differs depending on the type of the user U.

The displayed two-dimensional barcode TB may be displayed according to a restriction of the plot position PR illustrated in FIG. 20A.

### (Diving Check Screen D2)

FIG. 22A is a diagram illustrating an example of a diving check screen D2. FIG. 22B is a diagram illustrating an example of the diving three-dimensional screen D3.

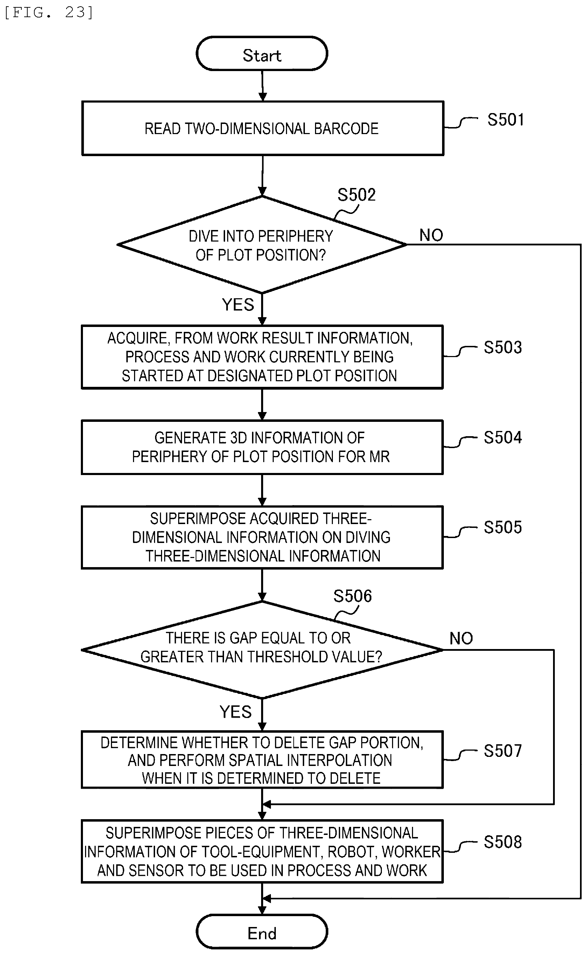

First, the user U reads the two-dimensional barcode TB on the virtual production monitoring model M1b as illustrated in FIG. 21 using the VR terminal CR. Then, options as illustrated in FIG. 22A are displayed on the VR terminal. When the user U selects "NO", the processing ends, and when "Go Dive" is selected, the diving three-dimensional screen D3, which is the second virtual reality image, as illustrated in FIG. 22B, is displayed on the VR terminal CR. The displayed diving three-dimensional screen D3 is diving three-dimensional information at the plot position PR (see FIG. 21) associated with the read two-dimensional barcode TB (see FIG. 21). The selection on the diving check screen D2 illustrated in FIG. 22A may be performed using line-of-sight tracking. The diving three-dimensional information (the second virtual reality image) displayed on the diving three-dimensional screen D3 in FIG. 22B is generated by the processing illustrated in FIG. 23. However, as the diving three-dimensional information displayed on the diving three-dimensional screen D3 in FIG. 22B, the information generated in step S206 in FIG. 14 may be used. Such a diving three-dimensional screen D3 is displayed on a screen of the VR terminal CR by the display processing unit 28 illustrated in FIG. 11.

### (Diving Processing)

FIG. 23 is a flowchart illustrating a procedure of the diving processing. Reference is made to FIGS. 2 and 21 to 22B as appropriate.

First, the user U uses the VR terminal CR to read the two-dimensional barcode TB, which is a mark displayed on the virtual production monitoring model M1b (S501).

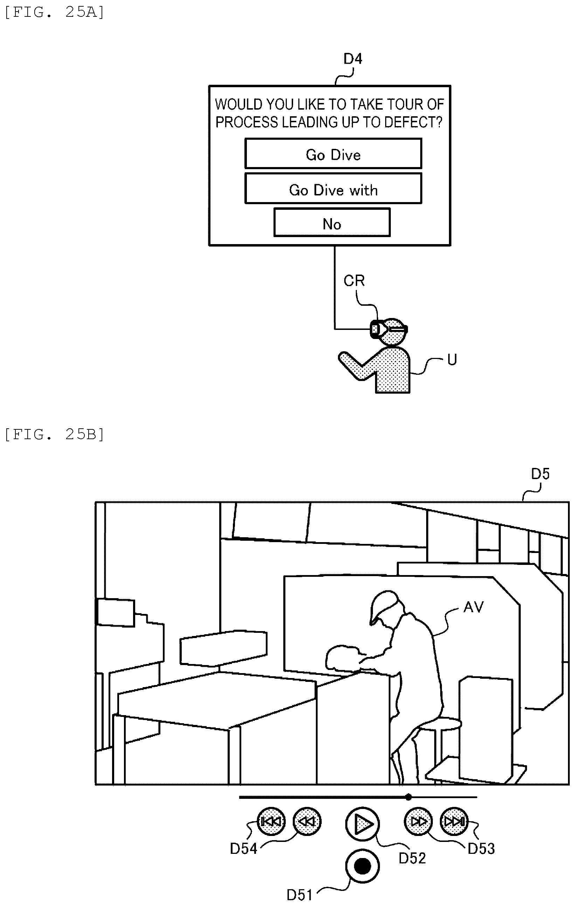

Then, the diving check screen D2 as illustrated in FIG. 22A is displayed on the screen of the VR terminal CR, and the user U selects either "Go Dive" or "Go Dive with" (see FIG. 25A) or "NO". Accordingly, it is determined whether to dive into a periphery of the plot position PR (S502).

When the user U selects "NO" (S502 → NO), the work monitoring support system Z ends the processing.

When the user U selects "Go Dive" or "Go Dive with" (S502 → YES), the virtual production monitoring model processing unit 24 refers to the work result information 410 illustrated in FIG. 8. The virtual production monitoring model processing unit 24 acquires work currently being started at the designated plot position PR from the work result information 410 illustrated in FIG. 8 (S503). The designated plot position PR is the plot position PR associated with the read two-dimensional barcode TB. The work currently being started is work for which date and time information is stored in the start date and time 418 in the work result information 410 but the end date and time 419 is blank.

Subsequently, the virtual production monitoring model processing unit 24 generates diving three-dimensional information of the periphery of the plot position PR (S504). The virtual production monitoring model processing unit 24 acquires the corresponding position identification information 617 from the field information 610 illustrated in FIG. 7A using the field identification information 414 in the work result information 410 as a key. Further, the virtual production monitoring model processing unit 24 acquires the floor three-dimensional information 625 stored in the position information 620 illustrated in FIG. 7B using the acquired position identification information 617 as a key. The virtual production monitoring model processing unit 24 generates diving three-dimensional information of the periphery of the plot position PR based on the acquired floor three-dimensional information 625.

Next, the virtual production monitoring model processing unit 24 superimposes, on the diving three-dimensional information, the three-dimensional information acquired from the three-dimensional camera 94d or the like used in the work (S505). The three-dimensional information acquired from the three-dimensional camera 94d or the like is information on a state of a current field that is acquired by the sensor 94.

The virtual production monitoring model processing unit 24 determines whether there is a gap equal to or larger than a threshold value in the superimposed diving three-dimensional information (S506). In step S506, the virtual production monitoring model processing unit 24 determines whether there is a gap between the diving three-dimensional information generated from the floor three-dimensional information 625 and the three-dimensional information (the actual three-dimensional information) acquired from the sensor 94 in step S505. The floor three-dimensional information 625 is information on the state of the field that is stored in the storage unit.

When there is no gap (S506 → NO), the virtual production monitoring model processing unit 24 advances the processing to step S508.

When there is a gap (S506 → YES), the virtual production monitoring model processing unit 24 determines whether to delete a gap portion, and performs spatial interpolation when it is determined to delete the gap portion (S507). The virtual production monitoring model processing unit 24 determines, based on the attribute information or the like in the floor three-dimensional information 625, whether to delete the gap portion. For example, when the gap portion is unnecessary for product production, the virtual production monitoring model processing unit 24 determines to delete the gap portion. The spatial interpolation is performed based on the floor three-dimensional information 625. Further, when the gap portion is not deleted, the virtual production monitoring model processing unit 24 generates the diving three-dimensional information by prioritizing the three-dimensional information obtained from the sensor 94. In this processing, a changed position or the like is reflected. As described above, when there is a gap between the information on the state of the current field that is acquired by the three-dimensional camera 94d and the floor three-dimensional information 625, the virtual production monitoring model processing unit 24 reflects the information on the current field on the diving three-dimensional information.

The virtual production monitoring model processing unit 24 superimposes pieces of three-dimensional information of the tool-equipment 92, the robot 93, the field worker P, and the sensor 94 used in the work on the diving three-dimensional information (S508). In step S508, the virtual production monitoring model processing unit 24 acquires the field identification information 325 corresponding to the plot position PR being a processing target of the work result information 410 illustrated in FIG. 8. The virtual production monitoring model processing unit 24 acquires the component identification information 327, the tool-equipment identification information 328, the robot identification information 329, the worker identification information 326, and the sensor identification information 330 from the work plan information 320 illustrated in FIG. 6B by using the acquired field identification information 325 as a key. Further, the virtual production monitoring model processing unit 24 acquires the three-dimensional information 176 of a component from the component information 170 illustrated in FIG. 5B using the acquired component identification information 327 as a key. Similarly, the virtual production monitoring model processing unit 24 acquires the three-dimensional information 136 of the tool-equipment 92 from the tool-equipment information 130 illustrated in FIG. 4A using the acquired tool-equipment identification information 328 as a key. The virtual production monitoring model processing unit 24 acquires the three-dimensional information 146 from the robot information 140 illustrated in FIG. 4B using the acquired robot identification information 329 as a key. The virtual production monitoring model processing unit 24 acquires a record from the worker information 150 illustrated in FIG. 4C using the acquired worker identification information 326 as a key. Further, the virtual production monitoring model processing unit 24 acquires the three-dimensional information 637 of the sensor 94 from the sensor information 630 illustrated in FIG. 7C using the acquired sensor identification information 330 as a key. The virtual production monitoring model processing unit 24 superimposes the acquired pieces of three-dimensional information 176, 136, 146, and 637 on the diving three-dimensional information generated in step S504. The virtual production monitoring model processing unit 24 generates the avatar AV (see FIG. 25B) of the field worker P based on each piece of information of the record acquired from the worker information 150, and superimposes the generated avatar AV on the diving three-dimensional information.

As described above, when the user U reads the two-dimensional barcode TB with the VR terminal CR, the diving three-dimensional screen D3 associated with the read two-dimensional barcode TB is displayed on the VR terminal CR.

In short, for the virtual production monitoring model M1 in which the state of the current field is reflected, the diving three-dimensional information which is a three-dimensional image in which the user U is as if present in the field is generated as the second virtual reality image. The generated diving three-dimensional information is displayed on the VR terminal CR used by the user U as illustrated in FIG. 22B via the display processing unit 28 in FIG. 11. In this way, the user U can grasp the state of the field as if the user U is at the field.

### (When Defect Occurs)

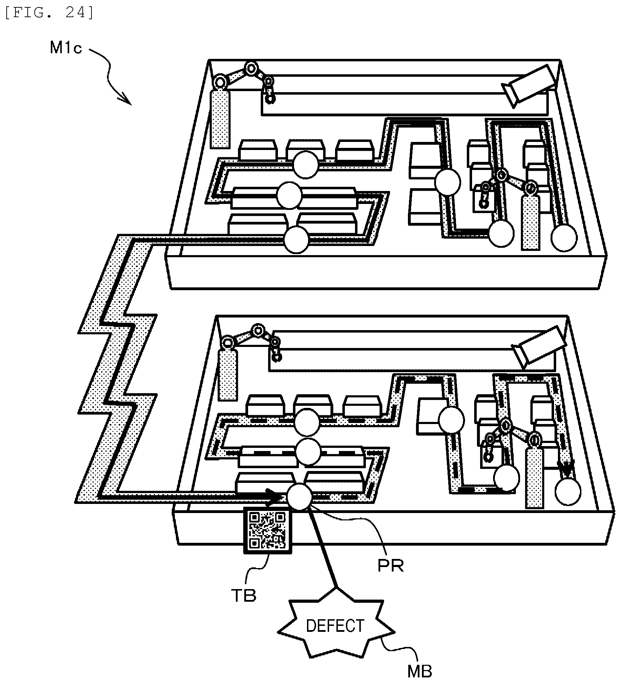

FIG. 24 is a diagram illustrating an example of the virtual production monitoring model M1c when a defect occurs. In FIG. 24, in order to avoid complication, reference numerals are not given to elements that are already described in FIG. 19.

The defect includes an inspection defect, a work delay, or the like. The inspection defect is detected when an abnormality is recorded in the acquired data 415 in the work result information 410. The work delay is detected when the end date and time 419 in the work result information 410 remains blank even after a predetermined time has passed since the scheduled end date and time 333 in the work plan information 320 illustrated in FIG. 6B. When such a defect such as an inspection defect or a work delay is detected, a position where the defect occurs as indicated by a reference sign MB in FIG. 24 is illustrated in the virtual production monitoring model M1c, and the two-dimensional barcode TB for diving is further displayed. At this time, the virtual production monitoring model processing unit 24 specifies the plot position PR at which the defect occurs using, as a key, the field identification information 414 of the record where the defect occurs in the work result information 410. The virtual production monitoring model processing unit 24 displays the defect information MB as illustrated in FIG. 24 for the plot position PR at which the defect occurs.

FIG. 25A is a diagram illustrating an example of a selection screen D4 displayed on the VR terminal CR when the two-dimensional barcode TB illustrated in FIG. 24 is read by the VR terminal CR. FIG. 25B is a diagram illustrating an example of a diving three-dimensional screen D5.

When the user U reads the two-dimensional barcode TB illustrated in FIG. 24, the selection screen D4 as illustrated in FIG. 25A is displayed on the screen of the VR terminal CR.

When "Go Dive" or "Go Dive with" is selected, the diving three-dimensional screen D5 as illustrated in FIG. 25B is displayed on the screen of the VR terminal CR. The diving three-dimensional screen D5 is a screen on which the diving three-dimensional information generated by the processing illustrated in FIG. 23 is displayed on the screen of the VR terminal CR. On the diving three-dimensional screen D5, the avatar AV of the field worker P that is generated based on the information in the worker information 150 illustrated in FIG. 4C is displayed. Incidentally, "Go Dive" is selected when the user U alone views the diving three-dimensional screen D5 illustrated in FIG. 25B. The "Go Dive with" is selected when the diving three-dimensional screen D5 is shared by a plurality of persons.

In the diving three-dimensional screen D5 illustrated in FIG. 25B, in addition to an MR image, a record button D51, a play and stop button D52, a fast-forward button D53, and a rewind button D54 are displayed. By operating the play and stop button D52, the fast-forward button D53, and the rewind button D54, the user U can view an MR moving image at the position where the defect occurs. The MR moving image can be made by the virtual production monitoring model processing unit 24 storing the three-dimensional information acquired by the sensor 94 in chronological order. As described above, the diving three-dimensional screen D5 displayed on the screen of the VR terminal CR can be fast-forwarded, rewound, and recorded.

As a result, the user U can check a flow of the product or the like at the plot position PR at which the defect occurs in the MR moving image, which helps to specify the cause of the defect.

When the user U selects the record button D51, the MR moving image can be recorded and stored. For example, by recording and storing the MR moving image that is the cause of the defect, the MR moving image of the defect can be shared with other users U.

When a plurality of users U read the two-dimensional barcode TB illustrated in FIG. 24, the diving three-dimensional screen D5 illustrated in FIG. 25B can be shared among the plurality of users U. That is, the common diving three-dimensional screen D5 is displayed on the screen of the VR terminal CR used by each of the plurality of users U. In this way, the plurality of users U can discuss the cause of the occurrence of the defect.

At this time, the virtual production monitoring model processing unit 24 may control the screen of the VR terminal CR such that the plurality of users U in different positions (types of users U) can check the process leading up to the occurrence of the defect in the same space from any viewpoint.

The virtual production monitoring model processing unit 24 may control the screen of the VR terminal CR such that a playback speed is the same for all users U viewing the MR moving image, or can be set to any desired playback speed.

### <Third Embodiment>

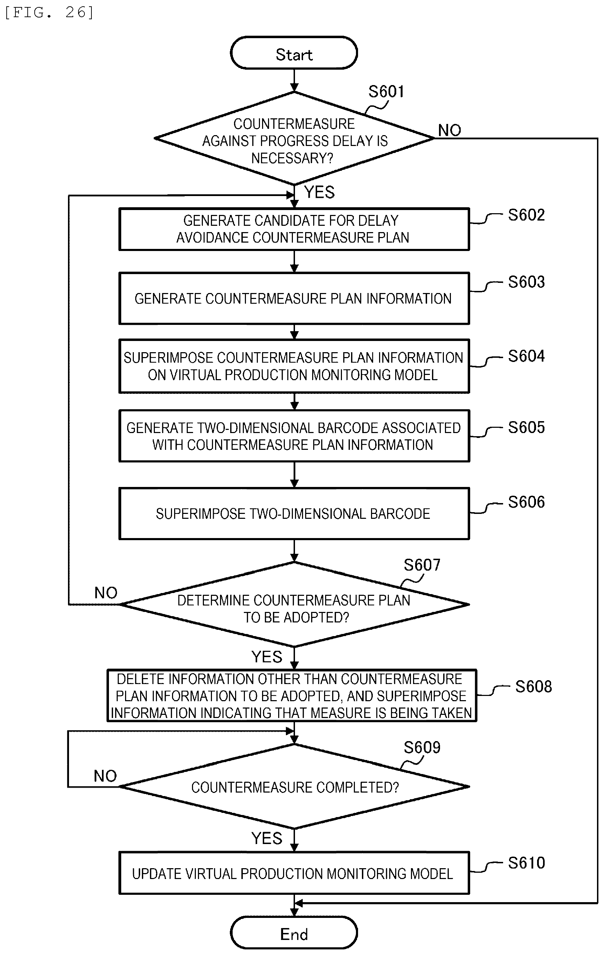

Hereinafter, a third embodiment of the invention will be described with reference to FIGS. 26 to 31.

In the third embodiment, presentation of a countermeasure plan for a defect and processing associated with adoption of the countermeasure plan will be described. In the third embodiment, an example of a progress delay is shown as a defect, but the same processing is performed for other defects.

### (Progress Delay Countermeasure Processing)

FIG. 26 is a flowchart illustrating a procedure of progress support countermeasure processing. Reference is made to FIGS. 1, 11, 15, and 21 as appropriate.

First, the user U determines whether a countermeasure against the progress delay is necessary along with detection of a work defect as illustrated in FIG. 24 (S601).

When the countermeasure is not necessary (S601 → NO), the work monitoring support system Z ends the processing.

When the countermeasure is necessary (S601 → YES), the production analysis and simulator unit 5, which is a countermeasure plan generation unit, generates a candidate for a delay avoidance countermeasure plan (S602). Since the generation of the candidate for the delay avoidance countermeasure plan is a known technique, detailed description in the present embodiment is omitted, and the production analysis and simulator unit 5 generates a countermeasure plan by performing a simulation for many work environments. For example, the production analysis and simulator unit 5 performs a simulation or the like when the number of field workers P is increased, thereby generating a countermeasure plan indicating how many field workers P are increased to avoid a delay. The number of candidates for the countermeasure plan to be generated may be one or more. The production analysis and simulator unit 5 may select a candidate having the highest delay countermeasure effect as a result of the simulation.

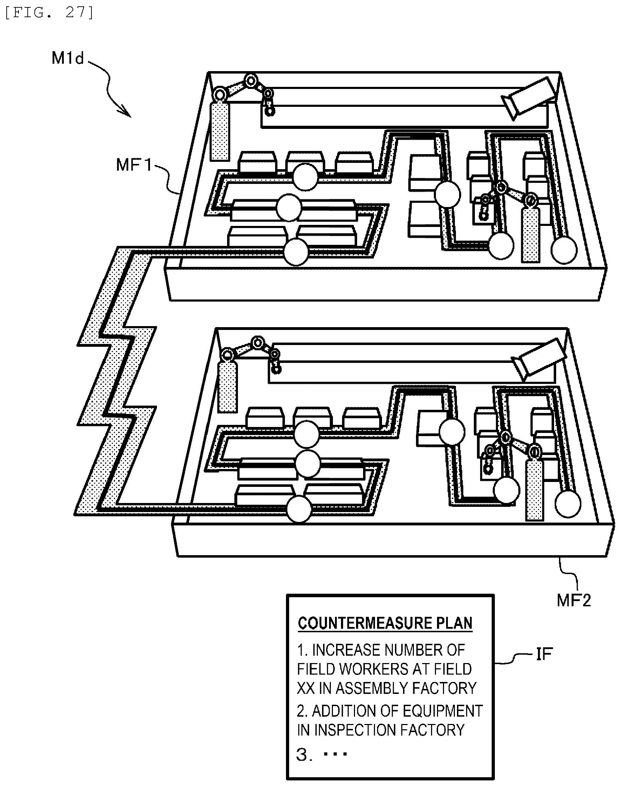

Next, the production analysis and simulator unit 5 generates information on the countermeasure plan generated in step S602 (countermeasure plan information IF (see FIG. 27)) (S603). In this way, the production analysis and simulator unit 5 generates at least one countermeasure plan by performing the simulation.

Subsequently, the virtual production monitoring model processing unit 24 superimposes the countermeasure plan information IF (see FIG. 27) generated in step S603 on the virtual production monitoring model M1 (FIG. 15) (S604).

The virtual production monitoring model processing unit 24 generates the two-dimensional barcode TB (see FIG. 21 and the like) associated with the countermeasure plan information IF (S605). The information generated in step S605 is not limited to the two-dimensional barcode TB, and may be a one-dimensional barcode, a button, or the like.

When the user U selects the countermeasure plan from the countermeasure plan information IF, the virtual production monitoring model processing unit 24 superimposes the two-dimensional barcode TB generated in step S605 on the virtual production monitoring model M1 (S606). The two-dimensional barcode TB to be superimposed corresponds to a countermeasure plan selected by the user U.

The virtual production monitoring model M1 on which the countermeasure plan information IF (the countermeasure plan) is superimposed is displayed on the VR terminal CR worn by the user U by the display processing unit 28. That is, the display processing unit 28 displays the generated countermeasure plan on the VR terminal CR together with the virtual production monitoring model M1.

The user U can dive into the virtual production monitoring model M1 by reading the two-dimensional barcode TB displayed on the VR terminal CR.

The user U determines whether to determine a countermeasure plan to be adopted by viewing specific information on the countermeasure plan (S607). When there are a plurality of countermeasure plans, the user U may select one or a plurality of countermeasure plans from the plurality of countermeasure plans.

When the user U determines not to adopt the currently displayed countermeasure plan (S607 → NO), the virtual production monitoring model processing unit 24 returns to step S602 and generates a countermeasure plan candidate again. At this time, conditions of the simulation performed by the production analysis and simulator unit 5 may be changed.

When the user U adopts the countermeasure (S607 → YES), the virtual production monitoring model processing unit 24 deletes countermeasure plan information other than the countermeasure plan information to be adopted, and superimposes, on the virtual production monitoring model M1, information indicating that the countermeasure plan is being taken (S608).

At the field, the field worker P is secured or a layout of lines is changed according to the countermeasure plan.

Subsequently, the virtual production monitoring model processing unit 24 determines whether the countermeasure is completed (S609). The countermeasure completion in step S609 refers to countermeasure completion at an actual field. The countermeasure completion may be determined by the user U inputting the countermeasure completion via the user terminal UT, or by performing image recognition on an image captured by a camera installed at the field.

When it is determined that the countermeasure is not completed (S609 → NO), the virtual production monitoring model processing unit 24 returns the processing to step S609.

When the countermeasure is completed (S609 → YES), the virtual production monitoring model processing unit 24 updates the virtual production monitoring model M1 (S610). The update of the virtual production monitoring model M1 is performed using 3D-CAD information after the countermeasure completion, three-dimensional information by a laser distance measuring device, and the like. The virtual production monitoring model processing unit 24 updates information on the taken countermeasure, such as the three-dimensional information 115 in the factory information 110 illustrated in FIG. 3A, the line information 120 illustrated in FIG. 3B, and the work information 310 illustrated in FIG. 6A.

### (Specific Example of Countermeasure Screen)

Next, a specific example of a delay countermeasure screen will be described with reference to FIGS. 27 to 29.

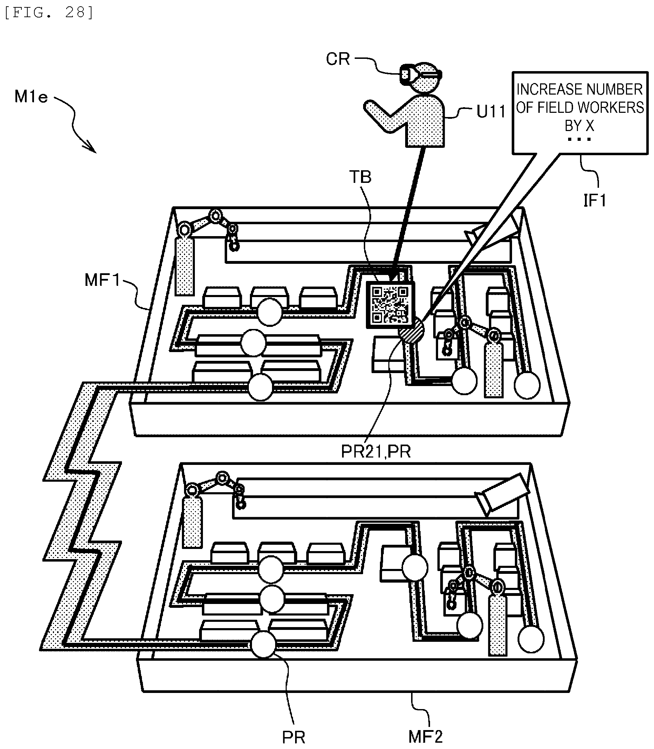

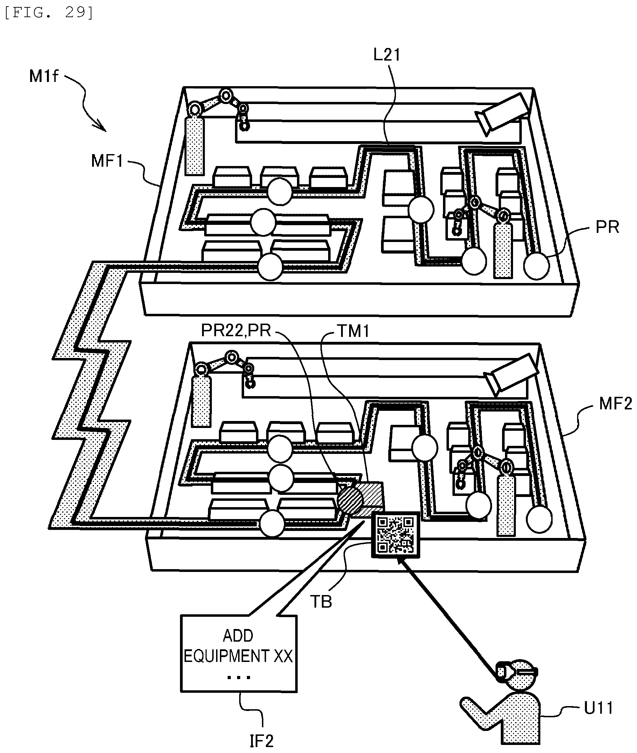

FIG. 27 is a diagram illustrating an example of the virtual production monitoring model M1d on which countermeasure plan information is displayed. FIGS. 28 and 29 are diagrams illustrating examples of the virtual production monitoring models M1e and M1f in which specific countermeasure plans are displayed.

In FIG. 27, a work route (a solid line) and the countermeasure plan information IF are superimposed on the virtual production monitoring model M1 illustrated in FIG. 15, and the two-dimensional barcode TB illustrated in FIG. 15 is not displayed. A screen illustrated in FIG. 27 is a screen displayed in step S604 in FIG. 26. The three-dimensional factory information MF1 and MF2 are the same as those illustrated in FIG. 13.

In the example illustrated in FIG. 27, a plurality of countermeasure plans such as "1. increase the number of field workers at a field XX in an assembly factory" and "2. addition of equipment in an inspection factory" are displayed.

When a line designer U11 (see FIG. 28), which is a type of the user U, wearing the VR terminal CR, selects "1. increase the number of field workers at a field XX in an assembly factory", a screen illustrated in FIG. 28 is displayed on the VR terminal CR (see FIG. 28) of the line designer U11. In FIG. 28, the virtual production monitoring model M1e is displayed. The screen illustrated in FIG. 28 is the screen displayed in step S606 in FIG. 26. The "field OO" corresponds to the plot position PR.

FIG. 28 illustrates that the number of field workers P is being increased to a plot position PR21 in the first factory F1, which corresponds to the three-dimensional factory information MF1. Countermeasure plan information IF1 is displayed at the plot position PR21. In the countermeasure plan information IF1, a specific measure such as the number of field workers P to be increased, or reduction in work time as a result of performing a main countermeasure is displayed. The plot position PR21 at which the countermeasure is to be taken is highlighted by a display (oblique lines in the example illustrated in FIG. 28) different from that for the other plot positions PR.

As described above, in FIG. 27, when the user U selects and inputs the countermeasure plan, the information on the countermeasure plan is displayed as the countermeasure plan information IF1. By performing such a display, the user U can easily grasp the countermeasure plan.

In FIG. 28, the two-dimensional barcode TB generated in step S605 in FIG. 26 is displayed. When the line designer U11 wearing the VR terminal CR, or the like reads the two-dimensional barcode TB displayed in FIG. 28, the line designer U11 or the like can dive into the plot position PR21 that is a countermeasure target in the virtual production monitoring model M1e. Since the diving processing is the same as the processing illustrated in FIGS. 21 to 22B, the description thereof will be omitted here.

When the line designer U11 selects "2. addition of equipment in an inspection factory", a screen illustrated in FIG. 29 is displayed on the VR terminal CR of the line designer U11. In FIG. 24, the virtual production monitoring model M1f is displayed. A screen illustrated in FIG. 29 is the screen displayed in step S606 in FIG. 26.

FIG. 29 illustrates that equipment is added to a plot position PR22 in the second factory F2 corresponding to the three-dimensional factory information MF2. The countermeasure plan information IF2 is displayed at the plot position PR22 corresponding to the equipment to be added. In the countermeasure plan information IF2, a specific measure such as a name of the equipment to be added, or reduction in work time as a result of performing a main countermeasure is displayed. The plot position PR22 at which the countermeasure is to be taken and a three-dimensional image TM1 of the equipment to be added are highlighted by a display different from that for the other plot positions PR and work line information L21, or the like. In the example illustrated in FIG. 29, the three-dimensional image TM1 of the equipment and the plot position PR22 are indicated by diagonal lines.

In FIG. 29, the two-dimensional barcode TB generated in step S605 of FIG. 26 is displayed. When the line designer U11 wearing the VR terminal CR, or the like reads the two-dimensional barcode TB displayed in FIG. 29, the line designer U11 or the like can dive into the plot position PR22 that is a countermeasure target in the virtual production monitoring model M1f.

The line designer U11 or the like can dive into the plot position PR that is a target position for the countermeasure using the two-dimensional barcode TB illustrated in FIGS. 28 and 29. Accordingly, the line designer U11 or the like can examine the countermeasure plan at intervals as if the line designer U11 or the like stands at the target position of the countermeasure.

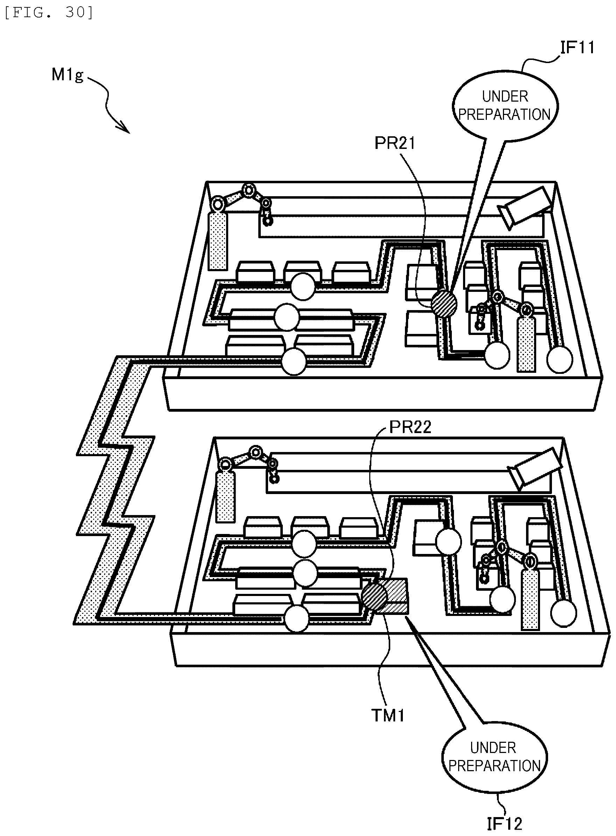

FIG. 30 is a diagram illustrating an example of the virtual production monitoring model M1g during execution of the countermeasure.

FIG. 30 is an example of the screen displayed in step S608 in FIG. 26. FIG. 30 illustrates a case where two of the countermeasure plans illustrated in FIG. 27, that is, "1. increase the number of field workers at a field XX in an assembly factory" and "2. addition of equipment in an inspection factory" are adopted.

In the virtual production monitoring model M1g illustrated in FIG. 30, speech bubbles IF11 and IF12 under preparation are displayed at the plot positions PR21 and PR22 that are targets of the countermeasures in FIGS. 28 and 29. In the plot positions PR21 and PR22 that are the targets of the countermeasures in FIGS. 28 and 29 and the three-dimensional image TM1 of the equipment, emphasis is applied in FIG. 30 in the same manner as in FIGS. 28 and 29.

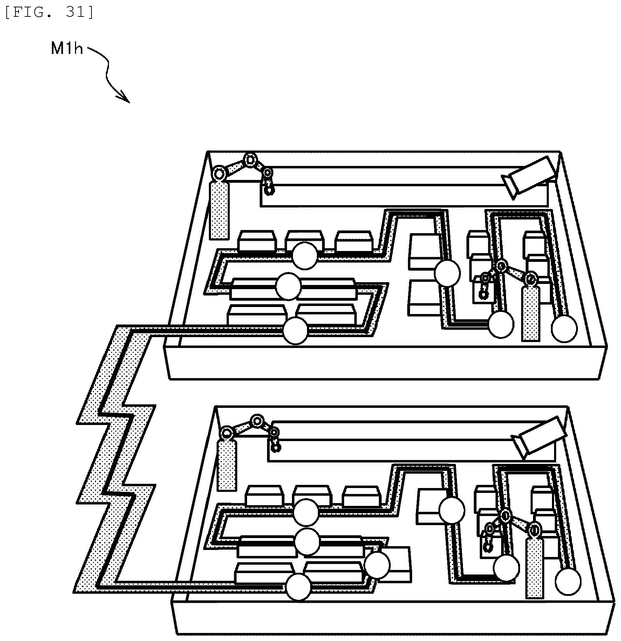

FIG. 31 is a diagram illustrating an example of the virtual production monitoring model M1h updated after the countermeasure is completed.

A screen illustrated in FIG. 31 is the screen displayed in step S610 in FIG. 26.

In the example illustrated in FIG. 31, the virtual production monitoring model M1h in which the countermeasure is reflected is displayed.

When the countermeasure is completed, the virtual production monitoring model processing unit 24 updates the three-dimensional information 115 in the factory information 110 illustrated in FIG. 3A, the line information 120 illustrated in FIG. 3B, the work information 310 illustrated in FIG. 6A, and the like.

### <Fourth Embodiment>

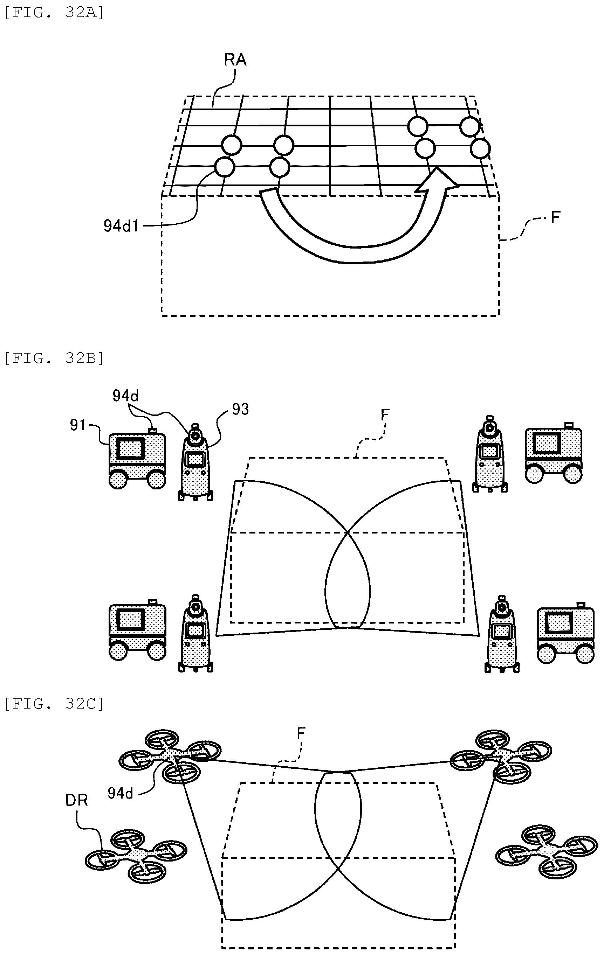

FIG. 32A is a diagram illustrating an example of installation of a movable three-dimensional camera 94d1.

The movable three-dimensional camera 94d1 is a type of the three-dimensional camera 94d illustrated in FIG. 2.

In FIG. 32A, movable rails RA are installed in a grid pattern on a ceiling of the factory F. The movable three-dimensional camera 94d1 moves on the movable rail RA. In this way, an image of three-dimensional information on the inside of the factory F is captured.

FIG. 32B is a diagram illustrating an example in which the three-dimensional camera 94d is mounted on the AGV 91 or the robot 93.

When the AGV 91 equipped with the three-dimensional camera 94d or the robot 93 moves in the factory F, the image of the three-dimensional information on the inside of the factory F is captured.

FIG. 32C is a diagram illustrating an example in which the three-dimensional camera 94d is mounted on a bottom of a drone DR.

When the drone DR on which the three-dimensional camera 94d is mounted flies in the factory F, the image of the three-dimensional information on the inside of the factory F is acquired.

As illustrated in FIGS. 32A to 32C, since the three-dimensional camera 94d is movable, the three-dimensional information on the inside of the factory F can be dynamically and easily acquired.

### <Fifth Embodiment>

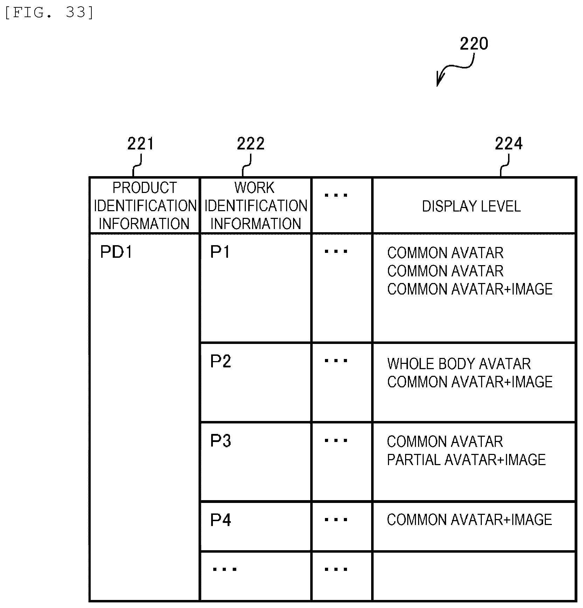

Next, setting of a display level 224 will be described with reference to FIGS. 33 to 35B.

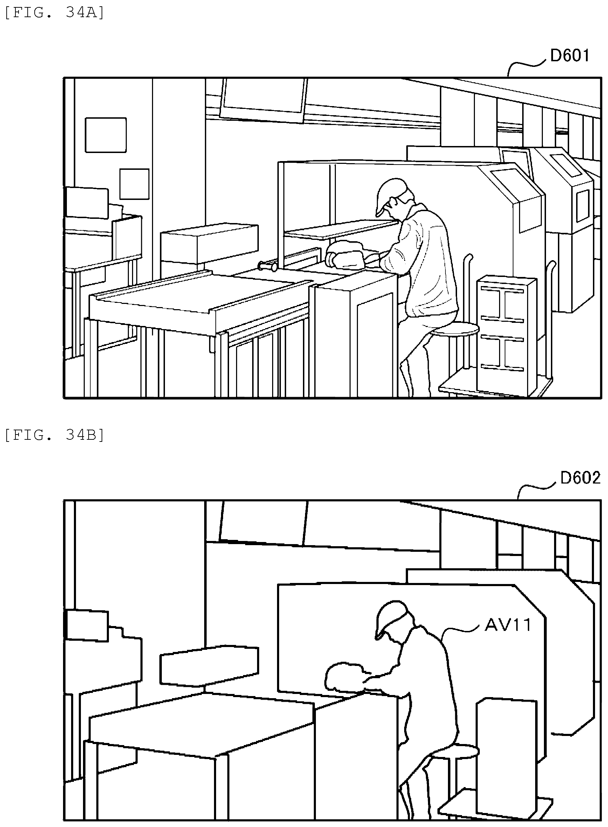

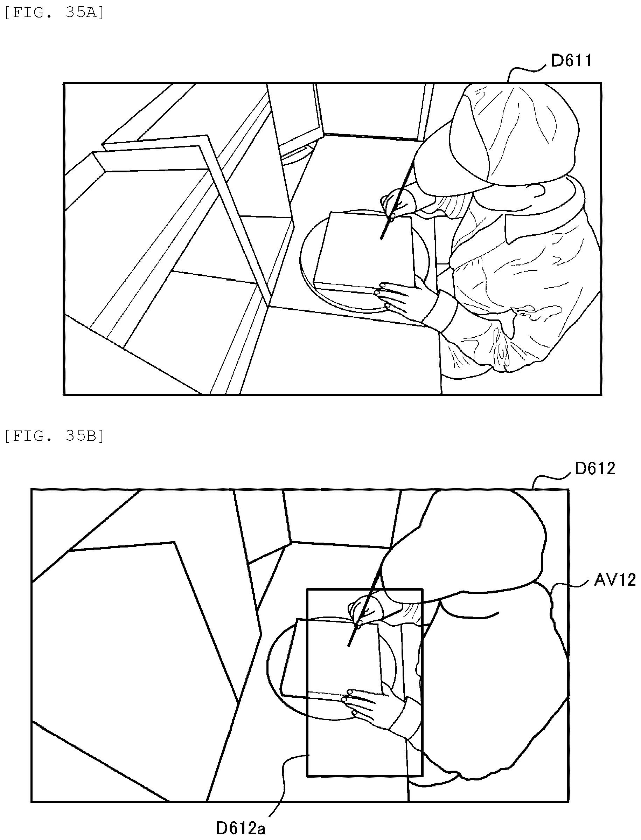

FIG. 33 is a diagram illustrating an example of display level setting information 220, FIGS. 34A and 35A are diagrams illustrating actual videos D601 and D611, and FIGS. 34B and 35B are diagrams illustrating examples of diving three-dimensional screens D602 and D612. The display level setting information 220 illustrated in FIG. 33 is data managed by the work monitoring unit 2 or the like.

The display level setting information 220 illustrated in FIG. 33 stores various kinds of identification information such as product identification information 221 and work identification information 222, and the display level 224 in an MR space.

Since the product identification information 221, the work identification information 222, and the like are the same as those described above, description thereof will be omitted. Identification information stored in the product identification information 221 is information linked to identification information stored in the product identification information 162 in the product information 160 illustrated in FIG. 5A. The work identification information 222 is information linked to the identification information stored in the work identification information 312 in the work information 310 illustrated in FIG. 6A.

The display level 224 in FIG. 33 includes a "common avatar" and a "common avatar + image". The "common avatar" means displaying the field worker P as an avatar, and the "common avatar + image" means displaying most of the field worker P as an avatar, but illustrating only a portion of the field worker P as an actual image.

FIGS. 34A and 34B are diagrams illustrating examples of the "common avatar". When an actual video is the video D601 as illustrated in FIG. 34A, in the "common avatar", the field worker P is displayed as an avatar AV11 in the diving three-dimensional screen D602 as the second virtual reality image, as illustrated in FIG. 34B. That is, in the "common avatar", the entire field worker P is displayed as the avatar AV11. The "common avatar" is used when it is unnecessary to display an accurate operation such as a "material set" or an "equipment operation".

The "common avatar" is not necessarily the avatar AV11 of the field worker P himself or herself, and for example, an animation of movement of the field worker P that is learned may be displayed. When a posture of the field worker P is desired to be viewed, the avatar AV11 may be displayed as a silhouette of a portion recognized as a person with respect to the image captured by a 2D camera or the three-dimensional camera 94d. In this way, on the diving three-dimensional screen D602, the field worker P working at a field corresponding to the diving three-dimensional screen D602 is displayed as the avatar AV11. In this way, the field worker P can reduce feeling of being monitored, and stress of the field worker P can be reduced.

In contrast to FIGS. 34A and 34B, FIGS. 35A and 35B are diagrams illustrating examples of the "common avatar + image". When the actual video is the video D611 as illustrated in FIG. 35A, the field worker P is displayed as illustrated in FIG. 35B on the diving three-dimensional screen D612 displaying the "common avatar + image". That is, in the "common avatar + image", the field worker P is displayed as an avatar AV12, and at the same time, a motion of a hand of the field worker P and a visual field target of the field worker P are displayed with an actual video D612a. The visual field target of the field worker P is a position that the field worker P is looking at. The "common avatar + image" is used when it is necessary to display an accurate motion of the hand or the like, such as "examination". In this manner, in FIG. 35B, a part of the avatar AV12 of the field worker P is displayed as a real image (the actual video D612a). In this way, the feeling that the field worker P is being monitored can be reduced, and a monitor can confirm a position that needs to be monitored as the actual video. That is, since an avatar display method of the field worker P can be set by the user U who checks the state of the field, a psychological burden on a worker can be reduced.

### <Hardware Structure>

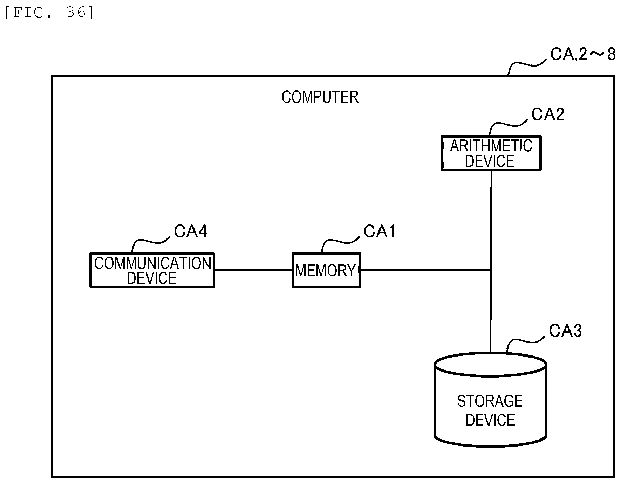

FIG. 36 is a diagram illustrating a hardware structure of a computer CA used in the present embodiment.

The computer CA includes the work monitoring unit 2, the work plan management unit 3, the work result management unit 4, the production analysis and simulator unit 5, the field management unit 6, the field control unit 7, and the field data acquisition unit 8 illustrated in FIG. 2.

The computer CA includes a memory CA1, an arithmetic device CA2, a storage device CA3, and a communication device CA4. The memory CA1 is implemented by a volatile memory such as a random access memory (RAM). The arithmetic device CA3 is implemented by a central processing unit (CPU), a graphic processing unit (GPU), and the like. The storage device CA3 is implemented by a nonvolatile memory such as a hard disk (HD) or a solid state drive (SSD). The communication device CA4 is implemented by a network interface card (NIC) or the like. The communication device CA4 is the communication unit 32 in FIG. 9 or the user communication unit 22 and the system communication unit 23 in FIG. 11.

A program is stored in the storage device CA3, and the program is loaded into the memory CA2. Each unit 31, 33 to 34 illustrated in FIG. 9 and each unit 21, 24 to 28 illustrated in FIG. 11 are implemented by executing the loaded program by the arithmetic device CA2.

Further, in the present embodiment, the work is mainly described, but the same processing can be performed for a process in which a plurality of pieces of work are collected.

### <Modification>

The invention is not limited to the embodiments described above and includes various modifications. For example, the embodiments described above has been described in detail in order to facilitate understanding of the invention, and are not necessarily limited to those including all the configurations described above. A part of a configuration according to a certain embodiment can be replaced with a configuration according to another embodiment, and a configuration according to another embodiment can be added to a configuration according to a certain embodiment. In addition, another configuration can be added to, deleted from, or replaced with a part of a configuration of each embodiment.

The work plan management unit 3 and the work result management unit 4 illustrated in FIG. 2 may be integrated into one production management unit.

The two-dimensional barcode TB displayed in FIG. 15 and the like may be read by the VR terminal CR, a PC or a tablet terminal (for example, the user terminal UT illustrated in FIG. 11) used by the user U. For example, a one-dimensional barcode or a predetermined mark may be used.

In the above embodiment, each functional unit can be implemented by hardware such as a circuit device in which a function thereof is implemented, or can be implemented by the arithmetic device CA2 such as a CPU executing software in which a function thereof is implemented.

In the above embodiment, an example of managing work in a production process has been described, but the present embodiment can also be applied to other fields, such as management of smart city-related facilities, the robot 93, automobiles, and human operations (maintenance, monitoring, and the like). The invention can be applied to a technique of mapping each base to three-dimensional information and recognizing a work content of the equipment, the robot 93, and a person using various sensors.

Some or all of configurations, functions, units 2 to 8, 21, 24 to 28, 31, 33 to 34, common database 1, and the like described above may be implemented by hardware, for example, by designing an integrated circuit. As illustrated in FIG. 36, the above-described configurations, functions, and the like may be implemented in software by a processor such as a CPU interpreting and executing a program that implements each function. Information such as a program, a table, or a file that implements each function can be stored on a HD, or can be stored in a memory, a recording device such as an SSD, or a recording medium such as an integrated circuit (IC) card, a secure digital (SD) card, or a digital versatile disc (DVD).

Control lines and information lines considered to be necessary for description are shown in each embodiment, and not all control lines and information lines in a product are necessarily illustrated. Actually, it may be considered that almost all the configurations are connected to one another.

### Reference Signs List

1 common database
2 work monitoring unit (first virtual reality generation unit, reflection unit, display processing unit, and second virtual reality generation unit)
3 work plan management unit
4 work result management unit
5 production analysis and simulator unit (countermeasure plan generation unit)
6 field management unit (storage unit)
7 field control unit
8 field data acquisition unit
24 virtual production monitoring model processing unit (first virtual reality generation unit, second virtual reality generation unit)
25 state information superimposing unit
26 three-dimensional basic information generation unit (first virtual reality generation unit)
91 AGV
92 tool-equipment
93 robot
94 sensor
94d three-dimensional camera (three-dimensional information acquisition unit)
94d1 movable three-dimensional camera (movable three-dimensional information acquisition unit)
94e environment sensor
320 work plan information (time series information)
410 work result information (time series information)
AV avatar
AV11 avatar
AV12 avatar
CR VR terminal (terminal)
D1A plot position management setting screen
D1B plot position management setting screen
D2 diving check screen
D3 diving three-dimensional screen (second virtual reality image)
D5 diving three-dimensional screen (second virtual reality image, common second virtual reality image)
D51 record button
D52 play and stop button
D53 fast-forward button
D54 rewind button
D602 diving three-dimensional screen (second virtual reality image)
D612 diving three-dimensional screen (second virtual reality image)
DR drone
F factory
F1 first factory
F2 second factory
F3 third factory
IF countermeasure plan information (countermeasure plan)
IF1 countermeasure plan information
IF2 countermeasure plan information
IF11 speech bubble
IF12 speech bubble
L1 virtual path
L31 work route information (information on work that is performed)
L32 work route information (information on work to be performed)
M0 three-dimensional basic information
M1 virtual production monitoring model (first virtual reality image)
M1a virtual production monitoring model (first virtual reality image)
M1b virtual production monitoring model (first virtual reality image)
M1c virtual production monitoring model (first virtual reality image)
M1d virtual production monitoring model (first virtual reality image)
M1e virtual production monitoring model (first virtual reality image)
M1f virtual production monitoring model (first virtual reality image)
M1g virtual production monitoring model (first virtual reality image)
M1h virtual production monitoring model (first virtual reality image)
MA1 speech bubble
MA2 speech bubble (information on work currently being performed)
MB defect information
P field worker
PF plot position information (field time series information)
PR plot position
PR1 plot position (information on work currently being started)
RA movable rail
TB two-dimensional barcode (marker)
U, U1 to U4 user
U11 line designer
UT user terminal
U11 line designer
Z work monitoring support system

## Claims

1. A work monitoring support system comprising:
a first virtual reality generation unit configured to generate a first virtual reality image which is a virtual three-dimensional image of a configuration of a predetermined field;
a reflection unit configured to acquire time series information of a state of the field and reflect the time series information in the first virtual reality image; and
a display processing unit configured to display, on a terminal used by a user, the first virtual reality image in which the time series information is reflected.

2. The work monitoring support system according to claim 1, wherein
the display processing unit displays information on a progress state of work being performed at the field together with the first virtual reality image.

3. The work monitoring support system according to claim 2, wherein
the display processing unit displays, on the first virtual reality image, information on the work that is already performed, information on the work to be performed, and information on the work currently being performed in different display methods.

4. The work monitoring support system according to claim 1, further comprising:
a countermeasure plan generation unit configured to generate at least one countermeasure plan by performing a simulation when a work defect is detected, wherein
the display processing unit displays the generated countermeasure plan together with the first virtual reality image on the terminal.

5. The work monitoring support system according to claim 4, wherein
when the user selects and inputs the countermeasure plan, information on the countermeasure plan is displayed.

6. The work monitoring support system according to claim 1, wherein
a three-dimensional information acquisition unit that acquires three-dimensional information of the field is movable.

7. The work monitoring support system according to claim 1, further comprising:
a second virtual reality generation unit configured to generate a second virtual reality image, which is a three-dimensional image in which the user is as if present in the field in the first virtual reality image in which a state of the current field is reflected by the reflection unit, wherein
the display processing unit displays the second virtual reality image on the terminal used by the user.

8. The work monitoring support system according to claim 7, wherein
the display processing unit displays a marker associating the first virtual reality image with the second virtual reality image on the second virtual reality image, and
when the user reads the marker on the terminal, the display processing unit displays the second virtual reality image associated with the read marker on the terminal.

9. The work monitoring support system according to claim 7, wherein
a plot position at which the second virtual reality image is displayable is displayed in the first virtual reality image, and
the displayed plot position changes depending on a type of the user.

10. The work monitoring support system according to claim 7, wherein
the display processing unit displays the common second virtual reality image on a screen of the terminal used by each of a plurality of the users.

11. The work monitoring support system according to claim 10, wherein
the second virtual reality image displayed on the screen of the terminal is capable of fast forwarding, rewinding, and recording.

12. The work monitoring support system according to claim 7, wherein
the display processing unit displays a field worker working at the field as an avatar in the first virtual reality image and the second virtual reality image.

13. The work monitoring support system according to claim 12, wherein
the display processing unit displays a part of the avatar of the field worker as a real image in the second virtual reality image.

14. The work monitoring support system according to claim 7, wherein
when there is a gap between information on the state of the current field that is acquired by a sensor and information on a state of the field that is previously stored in a storage unit, the second virtual reality generation unit reflects information on the current field in the second virtual reality image.

15. A work monitoring support system comprising:
a sensor installed at a predetermined field and configured to sense a state of the field;
a first virtual reality generation unit configured to generate a first virtual reality image which is a virtual three-dimensional image of a configuration of the field;
a reflection unit configured to acquire time series information of the state of the field and reflect the time series information in the first virtual reality image; and
a display processing unit configured to display, on a terminal used by a user, the first virtual reality image in which the time series information is reflected.
